# EUROPÄISCHE PATENTSCHRIFT

(11) **EP 0 798 168 B1**
(45) Veröffentlichungstag und Bekanntmachung des Hinweises auf die Patenterteilung: **18.10.2000**
(21) Anmeldenummer: 97104207.2
(22) Anmeldetag: 13.03.1997
(51) Int. Cl.: B60R 21/08, B60R 21/22

(54) **Seitenaufprall-Schutzeinrichtung für Fahrzeuginsassen**
Side collision protection device for vehicle passengers
Dispositif de protection contre le choc latéral pour les occupants d'un véhicule

(30) Priorität: 29.03.1996 DE 29605896 U
(43) Veröffentlichungstag der Anmeldung: 01.10.1997
(60) Teilanmeldung: 00105372.7
(73) Patentinhaber: TRW Occupant Restraint Systems GmbH & Co. KG, 73551 Alfdorf (DE)
(72) Erfinder: Stütz, Michael, 73565 Spraitbach (DE)
(74) Vertreter: Kitzhofer, Thomas, Dipl.-Ing.

(56) Entgegenhaltungen:
- WO-A-94/19215
- DE-A- 3 422 263
- DE-A- 4 307 175
- GB-A- 2 278 812
- US-A- 2 834 606

## Beschreibung

Die Erfindung betrifft eine Seitenaufprall-Schutzeinrichtung für Fahrzeuginsassen mit einem Kopf-Gassack.

Eine derartige Seitenaufprall-Schutzeinrichtung ist aus der WO 94/19215 bekannt. Der in dieser Druckschrift beschriebene Kopf-Gassack ist schlauchförmig ausgebildet und an seinen seitlichen Enden an der A- und an der B-Säule befestigt. In zusammengefaltetem Zustand erstreckt sich der Gassack unter einer Verkleidung längs der A-Säule über den Dachrahmen bis zur B-Säule. Da der Gassack aus einem speziellen Gewebe gefertigt ist, verkürzt sich beim Aufblasen seine Länge stark. In vollständig aufgeblasenem Zustand verläuft der Gassack deshalb nahezu linear von der A-Säule bis zur B-Säule, und verhindert, daß der Kopf eines Fahrzeuginsassen auf die Seitenscheibe aufprallen kann.

Aus der DE 34 22 263 A1 ist ebenfalls eine Seitenaufprall-Schutzeinrichtung bekannt. Hierbei ist im Bereich des Dachrahmens ein Gassack angeordnet, der im aufgeblasenen Zustand seitlich des Kopfes eines Insassen angeordnet ist. Ein komprimierbarer gasgefüllter Vorratsbehälter im Bereich des Türschwellers steht über eine Leitung mit dem Gassack in Verbindung. Bei einem Seitenaufprall wird der Türschweller und damit der Vorratsbehälter verformt und das Gas aus dem Vorratsbehälter in den Gassack gedrückt. Diese Konstruktion ist sehr aufwendig und funktioniert nur, wenn das mit dem Gassack ausgestattete Fahrzeug im Bereich des Türschwellers auch tatsächlich deformiert wird. Darüber hinaus ist der Gassack im aufgeblasenen Zustand nicht stabil im Fahrzeug gehaltert.

Die nachveröffentlichte WO 97/35748, bei der wirksam die europäischen Länder Deutschland, Frankreich, Großbritannien und Schweden benannt sind, beschreibt ein Kopfschutzsystem mit einem Gassack, der sich seitlich eines Frontinsassen bis seitlich eines Heckinsassen erstreckt. Der Gassack weist zwei große Ausschnitte, nämlich einen vorderhalb des Kopfes des Frontinsassen und einen vorderhalb des Kopfes des Heckinsassen auf, die keinen Rückhalteschutz bieten, aber das Falten und Unterbringen des vorhangähnlichen Gassacks im Fahrzeug erleichtern sollen. Die Lage des Gassack im aufgeblasenen Zustand ist jedoch bezüglich der Stabilität noch verbesserungsbedürftig.

Die nachveröffentlichte WO 96/26087, bei der die europäischen Länder Deutschland, Spanien, Frankreich und Großbritannien wirksam benannt sind, beschreibt ebenfalls einen langgestreckten Kopf-Gassack, der gemäß einer Ausführungsform bis in den Heckbereich verläuft. Der Gassack soll sich längs seines unteren Randes zwischen den Befestigungspunkten dadurch verspannen, daß er zahlreiche vertikale Kammern aufweist, ähnlich einer Luftmatraze.

Aufgabe der Erfindung ist es, eine einfache Seitenaufprall-Schutzeinrichtung zu schaffen, die im aufgeblasenen Zustand stabil im Fahrzeug gehaltert ist, bei der der Gassack und möglichst auch der Gasgenerator auf einfache Weise im Fahrzeug untergebracht werden können und die möglichst auch noch bei einem Fahrzeugüberschlag Schutz bieten kann.

Diese Aufgabe wird durch die Merkmale der unabhängigen Ansprüche gelöst.

Die erfindungsgemäße Seitenaufprall-Schutzeinrichtung weist einen gemeinsamen Kopf-Gassack für den Frontinsassen und den Heckinsassen auf und bietet eine einfach einzubauende und kostengünstige Schutzeinrichtung, bei der ebenso wenig Teile in das Fahrzeug eingebaut werden müssen wie beispielsweise bei dem bekannten Kopf-Gassack für den Frontinsassen.

In eingebautem, gefalteten Zustand erstreckt sich der Kopf-Gassack gemäß einer ersten Ausführungsform vorzugsweise längs zumindest eines Teils der A-Säule bis weiter längs des Dachrahmens und längs zumindest eines Teils der C-Säule eines Fahrzeugs. Der Kopf-Gassack ist in Längsrichtung ungefaltet und muß sich nur noch in Querrichtung entfalten, so daß der Aufblasvorgang schnell erfolgt.

Ferner ist vorgesehen, daß sich der aufgeblasene Kopf-Gassack von der A-Säule bis zur C-Säule erstreckt und mit seinen entgegengesetzten Enden einerseits an der A-Säule und andererseits an der C-Säule befestigt ist. Der Kopf-Gassack erstreckt sich im aufgeblasenen Zustand schlauch- oder kissenförmig längs der Seitenscheiben von der A- bis zur C-Säule, so daß unabhängig von den Sitzpositionen der Fahrzeugfront- und Fahrzeugheckinsassen ein Seitenaufprallschutz vorhanden ist.

Gemäß einer Ausführungsform ist der Kopf-Gassack nicht nur an der A- und der C-Säule befestigt, sondern auch noch längs seines oberen Randes am Dachrahmen. Bei dieser Ausführungsform stützt sich der aufgeblasene Gassack deshalb nicht nur an seinen beiden Enden, sondern auch längs des oberen Randes am Fahrzeug ab und hat dadurch mehr Stabilität.

Der Kopf-Gassack kann mit an der A- und/oder der C-Säule befestigten Gasgeneratoren über entsprechende Gaseintrittsöffnungen an seinen entsprechenden Enden verbunden sein.

Zur einfacheren Montage ist der Kopf-Gassack vorzugsweise in gefaltetem Zustand in einem Montageschlauch angeordnet, welcher, ohne daß es weiterer Aufbauten bedarf, direkt am Fahrzeug befestigt werden kann. Der Kopf-Gassack ist zudem längs seines in aufgeblasenem Zustand oberen Randes am Fahrzeug befestigt.

Eine weitere Ausführungsform sieht vor, daß die Seitenaufprall-Schutzeinrichtung als in das Fahrzeug nachträglich einbaubare Einheit ausgebildet ist, wobei dann vorzugsweise der Montageschlauch aus flexiblem Material hergestellt ist und somit an die Kontur des Fahrzeugs angepaßt werden kann.

Die Länge des Kopf-Gassacks ist im aufgeblasenen Zustand geringer als im gefalteten Zustand, in welchem er bogenförmig verlaufend im Fahrzeug längs der A-Säule über den Dachrahmen bis zur C-Säule eingebaut ist. Durch die Längenverkürzung beim Aufblasen wird der Kopf-Gassack zwischen seinen Befestigungsstellen verspannt, nachdem er aus dem Montageschlauch ausgetreten ist. Die Längenverkürzung kann einerseits durch Vorsehen eines speziellen Gewebes, wie es in der WO 94/19215 beschrieben ist, erreicht werden oder durch mindestens ein den Kopf-Gassack im aufgeblasenen Zustand teilweise einschnürendes Element, das quer zu seiner Längsrichtung verläuft. Das einschnürende Element ist vorzugsweise am Kopf-Gassack befestigt und schnur- oder bandartig ausgebildet. Es kann aber ebenso am Fahrzeug befestigt sein.

Ferner kann vorgesehen sein, daß im Gassackinneren eine an der Gassackinnenwand anliegende, wärmebeständige Folie vorhanden ist, die so angeordnet und dimensioniert ist, daß sie im aufgeblasenen Zustand des Kopf-Gassacks nicht auf Zug belastet wird. Diese Folie nimmt keine Kraft auf, sondern hat lediglich eine Dichtfunktion, so daß der Kopf-Gassack über mehrere Sekunden hinweg vollständig aufgeblasen bleibt und auch bei einem Fahrzeugüberschlag Schutz gewährt.

Weitere Merkmale und Vorteile der Erfindung ergeben sich aus der folgenden Beschreibung und aus den Zeichnungen, auf die Bezug genommen wird. In den Zeichnungen zeigen:
- Fig. 1 eine schematische Seitenansicht einer ersten Ausführungsform der erfindungsgemäßen Seitenaufprall-Schutzeinrichtung mit einem aufgeblasenen Kopf-Gassack;
- Fig. 2 einen Schnitt längs der Linie A-A nach Fig. 1 durch einen Dachrahmen mit dem eingebauten, zusammengefalteten Kopf-Gassack; und
- Fig. 3 eine schematische Seitenansicht einer zweiten Ausführungsform der erfindungsgemäßen Seitenaufprall-Schutzeinrichtung mit einem schlauchartigen Kopf-Gassack im aufgeblasenen Zustand.

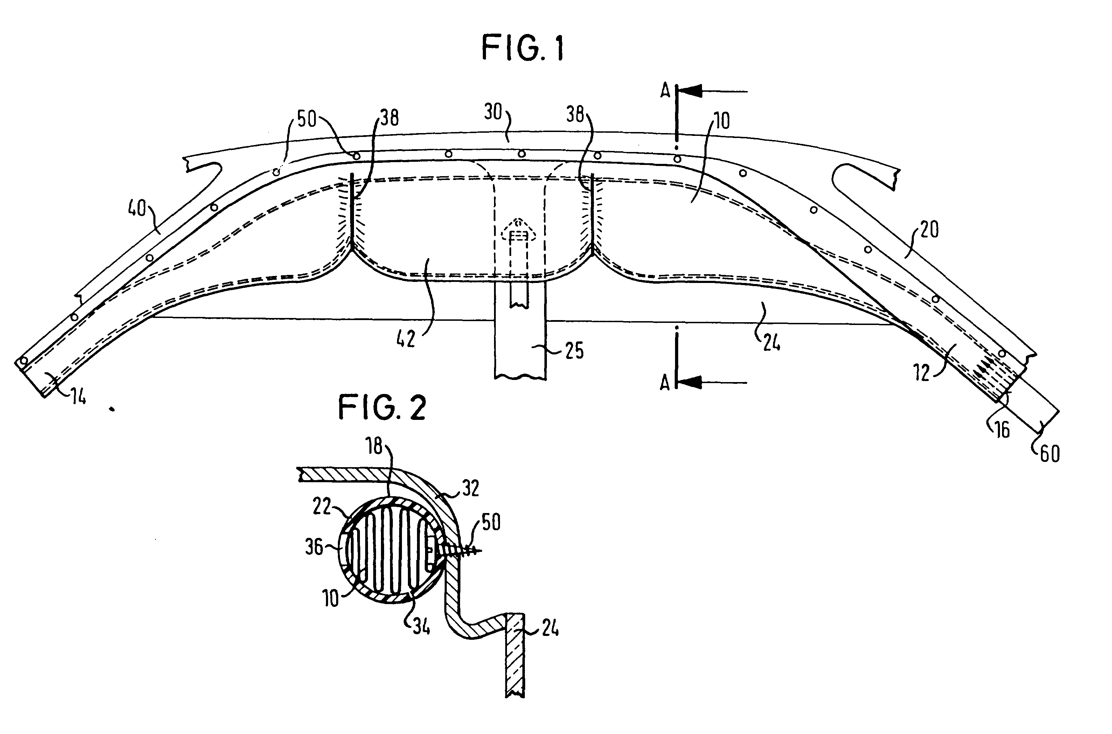

In Fig. 1 ist eine Seitenaufprall-Schutzeinrichtung mit einem Kopf-Gassack 10 gezeigt, der einen Seitenaufprallschutz sowohl für einen Frontinsassen als auch für Heckinsassen bietet. Der Kopf-Gassack 10 erstreckt sich in gefaltetem Zustand unter einer Fahrzeuginnenverkleidung längs der A-Säule 20, längs des Dachrahmens 30 und längs der C-Säule 40. Zum einfacheren Einbau des Kopf-Gassacks 10 ist dieser in einem Montageschlauch 22 gefaltet angeordnet, wie in Fig. 2 gezeigt. Der Kopf-Gassack 10 muß jedoch nicht zusammen mit dem Montageschlauch 22 hinter der Verkleidung 32 angeordnet sein. Es ist nämlich möglich, die gesamte Seitenaufprall-Schutzeinrichtung als nachträglich in das Fahrzeug einbaubare Einheit auszubilden, bei der der Montageschlauch 22, wie in Fig. 2 gezeigt, an der Außenseite der Verkleidung 32 mittels Schrauben 50 angebracht wird. Durchtrittsöffnungen 36 am Montageschlauch 22 erlauben einen Angriff eines Schraubendrehers an den Befestigungsschrauben 50. Die Schrauben 50 dienen nicht nur zur Befestigung des Montageschlauchs 22, sondern auch zur Befestigung des im aufgeblasenen Zustand oberen Randes des Kopf-Gassacks am Fahrzeug.

Eine schlitzartige Austrittsöffnung 34 in Längsrichtung des Montageschlauchs 22 weist in montiertem Zustand zur Seitenscheibe 24, damit sich der Kopf-Gassack 10 bei einem Aufprall in Richtung Seitenscheibe 24 ausbreitet und sich zwischen Kopf und Fahrzeug schiebt. Der Montageschlauch 22 ist aus flexiblem Material, vorzugsweise weichem Kunststoff gefertigt, weist eine ovale, runde oder beliebige andere Querschnittsform auf und kann beschichtet sein, um ein leichteres Herausgleiten des Kopf-Gassacks 10 beim Aufblasen zu gewährleisten.

Wenigstens an einem Ende 12 oder 14 des Kopf-Gassacks 10 hat dieser eine Gaseintrittsöffnung 16, mit der er mit einem Gasgenerator 60 in Verbindung steht. Wenn aber an beiden Enden 12 und 14 Gasgeneratoren 60 vorhanden sind, kann die Aufblaszeit des Kopf-Gassacks 10 reduziert werden.

Im Falle eines Seitenaufpralls strömt Gas in das Gassackinnere, wie mittels der Pfeile in Fig. 1 gezeigt, und bläst den aus dem Montageschlauch 22 austretenden Kopf-Gassack 10 auf. Falls dieser unter der Verkleidung 32 angeordnet ist, wird die Verkleidung 32 aufgerissen. Durch das Aufblasen reduziert sich die Länge des Kopf-Gassacks 10, so daß er sich zwischen seinen bogenförmig angeordneten Befestigungsstellen verspannt. Die notwendige Verkürzung des Kopf-Gassacks 10 in Längsrichtung wird unter anderem durch ihn in aufgeblasenen Zustand einschnürende Elemente 38 erreicht, die quer zu seiner Längsrichtung verlaufen. Die Elemente 38 sind gemäß Fig. 1 schnurartig ausgebildet, an der Wandung des Kopf-Gassacks 10 selbst befestigt und verlaufen U-förmig um den unteren Randbereich 42 des Kopf-Gassacks 10 und schnüren diesen ein, so daß der Kopf-Gassack 10 aus drei kissenförmigen Elementen besteht, die aufgrund ihrer konvexen Wölbung nach außen eine große Oberfläche haben. Die Elemente 38 können an unterschiedlichen Stellen am Kopf-Gassack 10 angeordnet sein, so daß sie die Form des aufgeblasenen Kopf-Gassacks 10 sowie seine Längsverkürzung beim Aufblasen mitbestimmen.

Zu seinen seitlichen Enden 12 und 14 hin verjüngt sich der Kopf-Gassack 10, so daß ein an der A- oder C-Säule 20 bzw. 40 angebrachter Gasgenerator 60 seitlich des Armaturenbretts oder im Rücklehnenbereich des Rücksitzes versteckt angeordnet sein kann und der verjüngte Abschnitt als Gasführungskanal wirkt.

Im Gassackinneren ist eine, im aufgeblasenen Zustand an der Gassackinnenwand anliegende, wärmebeständige Polyesterfolie vorgesehen, die so angeordnet und dimensioniert ist, daß sie im aufgeblasenen Zustand des Kopf-Gassacks 10 keine Zugkraft aufnehmen muß.

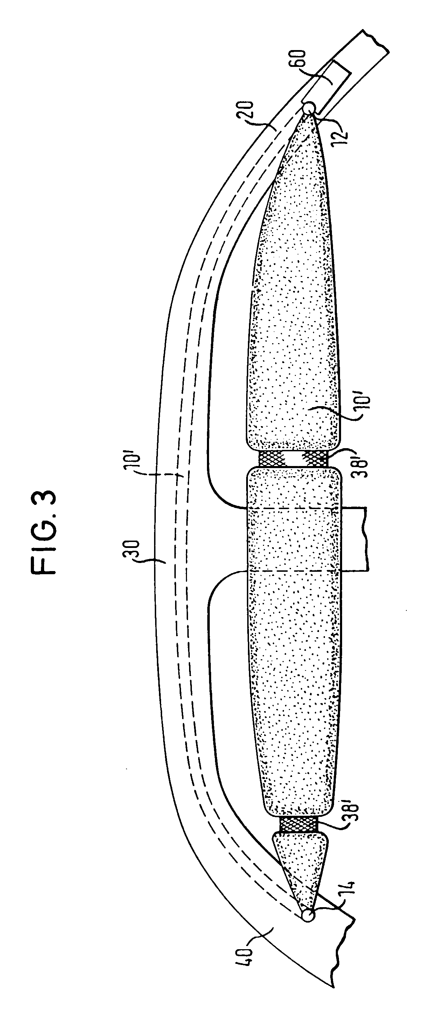

Während sich in der in Fig. 1 gezeigten ersten Ausführungsform der obere Rand des Kopf-Gassacks 10 auch im aufgeblasenen Zustand längs der A-Säule 20, des Dachrahmens 30 und der C-Säule 40 erstreckt und der untere Randbereich 42 bis nahe an das untere Ende der Seitenscheibe 24 reicht, ist der in Fig. 3 gezeigte Kopf-Gassack 10' ein schlauchartiges Element, welches nur an seinen Enden 12 und 14 am befestigt ist. Der Kopf-Gassack 10' gemäß dieser Ausführungsform wird einerseits an der A-Säule 20 und andererseits an der C-Säule 40 am Fahrzeug arretiert. Im zusammengefalteten Zustand, wie er mit unterbrochenen Linien gezeigt ist, ist der Kopf-Gassack 10' unter der Seitenverkleidung längs der A-Säule 20, dem Dachrahmen 30 bis zur C-Säule 40 versteckt. Mehrere den schlauchartigen Kopf-Gassack 10' ringförmig umgebende Gewebebänder dienen als einschnürende Elemente 38', die den Kopf-Gassack 10 beim Aufblasen in Längsrichtung verkürzen.

## Patentansprüche (Patentansprüche für folgende(n) Vertragsstaat(en): DE, FR, GB)

1. Seitenaufprall-Schutzeinrichtung für Fahrzeuginsassen, mit einem Kopf-Gassack (10), dadurch gekennzeichnet, daß sich der langgestreckte, für einen Front- und einen Heckinsassen vorgesehene, Kopf-Gassack (10) in aufgeblasenem Zustand von einem Bereich seitlich eines Frontinsassen bis in einen Bereich seitlich eines Heckinsassen erstreckt und in gefaltetem Zustand in einem Montageschlauch (22) angeordnet ist.

2. Seitenaufprall-Schutzeinrichtung nach Anspruch 1, dadurch gekennzeichnet, daß der Montageschlauch (22) innenseitig beschichtet ist.

3. Seitenaufprall-Schutzeinrichtung nach Anspruch 1 oder 2, dadurch gekennzeichnet, daß sich der Montageschlauch (22) von einem unteren Ende der A-Säule (20) bis zur C-Säule (40) erstreckt.

4. Seitenaufprall-Schutzeinrichtung nach einem der vorstehenden Ansprüche, dadurch gekennzeichnet, daß der Montageschlauch (22) am Fahrzeug und der Kopf-Gassack (10) längs seines in aufgeblasenem Zustand oberen Randes am Fahrzeug befestigt ist.

5. Seitenaufprall-Schutzeinrichtung nach einem der vorstehenden Ansprüche, dadurch gekennzeichnet, daß der Montageschlauch (22) eine in Längsrichtung verlaufende, schlitzartige Austrittsöffnung (34) hat, die in montiertem Zustand des Montageschlauchs (22) zur Seitenscheibe (24) weist.

6. Seitenaufprall-Schutzeinrichtung nach einem der vorstehenden Ansprüche, dadurch gekennzeichnet, daß der Montageschlauch (22) aus flexiblem Material ist.

7. Seitenaufprall-Schutzeinrichtung nach einem der vorhergehenden Ansprüche, dadurch gekennzeichnet, daß sich der langgestreckte Kopf-Gassack (10) in aufgeblasenem Zustand von einem Bereich seitlich eines Frontinsassen in Kopfhöhe durchgehend bis in einen Bereich seitlich eines Heckinsassen erstreckt und im Bereich seines im aufgeblasenen Zustand unteren Randes an seinen Längsenden nur an der A- und der C- Säule des Fahrzeug (20, 40) befestigt ist und sich in aufgeblasenem Zustand zwischen seinen Befestigungspunkten an der A- und der C-Säule (20, 40) verspannt.

8. Seitenaufprall-Schutzeinrichtung nach einem der vorstehenden Ansprüche, dadurch gekennzeichnet, daß die Schutzeinrichtung als in das Fahrzeug nachträglich einbaubare Einheit ausgebildet ist.

9. Seitenaufprall-Schutzeinrichtung nach einem der vorstehenden Ansprüche, dadurch gekennzeichnet, daß der Kopf-Gassack (10) über ein sich verjüngendes Ende (12, 14) mit einem Gasgenerator (60) in Strömungsverbindung steht.

10. Seitenaufprall-Schutzeinrichtung nach einem der vorstehenden Ansprüche, dadurch gekennzeichnet, daß eine an der Gassackwand anliegende Folie vorgesehen ist, die so ausgebildet ist, daß der Kopf-Gassack (10) über mehrere Sekunden hinweg aufgeblasen bleibt.

11. Seitenaufprall-Schutzeinrichtung nach einem der vorstehenden Ansprüche, dadurch gekennzeichnet, daß im Gassackinneren eine an der Gassackinnenwand anliegende, wärmebeständige Folie vorhanden ist, die so angeordnet und dimensioniert ist, daß sie in aufgeblasenem Zustand des Kopf-Gassacks (10) nicht auf Zug belastet ist.

12. Seitenaufprall-Schutzeinrichtung nach einem der vorstehenden Ansprüche, dadurch gekennzeichnet, daß der Kopf-Gassack (10) an einem Ende (12) an der A-Säule (20) und an einem entgegengesetzten Ende (14) an der C-Säule (40) befestigt ist.

13. Seitenaufprall-Schutzeinrichtung nach einem der vorstehenden Ansprüche, dadurch gekennzeichnet, daß der Kopf-Gassack (10) im gefalteten Zustand bogenförmig verlaufend in das Fahrzeug längs der A-Säule (20), längs des Dachrahmens (30) bis zur C-Säule (40) eingebaut ist.

14. Seitenaufprall-Schutzeinrichtung nach einem der vorstehenden Ansprüche, dadurch gekennzeichnet, daß sich der Kopf-Gassack (10) in gefaltetem Zustand längs zumindest eines Teils der A-Säule (20), längs des Dachrahmens (30) und längs zumindest eines Teils der C-Säule (40) eines Fahrzeugs erstreckt.

15. Seitenaufprall-Schutzeinrichtung nach einem der vorstehenden Ansprüche, dadurch gekennzeichnet, daß sich der Kopf-Gassack (10) in gefaltetem Zustand von einem unteren Ende der A-Säule (20) bis zu einem unteren Ende der C-Säule (40) erstreckt.

16. Seitenaufprall-Schutzeinrichtung nach einem der vorstehenden Ansprüche, dadurch gekennzeichnet, daß sich der Kopf-Gassack (10) in aufgeblasenem Zustand von der A-Säule (20) bis zur C-Säule (40) eines Fahrzeugs erstreckt.

17. Seitenaufprall-Schutzeinrichtung nach einem der vorstehenden Ansprüche, dadurch gekennzeichnet, daß der Kopf-Gassack (10) an seinem in aufgeblasenem Zustand oberen Rand an der A-Säule (20), am Dachrahmen (30) und an der C-Säule (40) eines Fahrzeugs befestigt ist.

18. Seitenaufprall-Schutzeinrichtung nach einem der vorstehenden Ansprüche, dadurch gekennzeichnet, daß sich der Kopf-Gassack (10) in aufgeblasenem Zustand zwischen seinen Befestigungsstellen verspannt.

19. Seitenaufprall-Schutzeinrichtung nach Anspruch 18, dadurch gekennzeichnet, daß sich der Kopf-Seitengassack (10) in aufgeblasenem Zustand zwischen seinen Befestigungsstellen an der A-Säule (20) und der C-Säule (40) verspannt.

20. Seitenaufprall-Schutzeinrichtung nach Anspruch 18, dadurch gekennzeichnet, daß sich der Kopf-Gassack (10) zwischen seinen bogenförmig angeordneten Befestigungsstellen im aufgeblasenen Zustand verspannt.

21. Seitenaufprall-Schutzeinrichtung nach einem der vorstehenden Ansprüche, dadurch gekennzeichnet, daß der Kopf-Gassack (10) mindestens ein ihn im aufgeblasenen Zustand teilweise einschnürendes Element (38) aufweist, das quer zu seiner Längsrichtung verläuft und den Kopf-Gassack (10) beim Aufblasen in Längsrichtung verkürzt.

22. Seitenaufprall-Schutzeinrichtung nach Anspruch 21, dadurch gekennzeichnet, daß das einschnürende Element (38) an der Wandung des Kopf-Gassacks (10) befestigt und schnur- oder bandartig ausgebildet ist.

23. Seitenaufprall-Schutzeinrichtung nach Anspruch 21 oder 22, dadurch gekennzeichnet, daß das Element (38) den unteren Randbereich (42) des Kopf-Gassacks (10) einschnürt.

24. Seitenaufprall-Schutzeinrichtung nach einem der vorstehenden Ansprüche, dadurch gekennzeichnet, daß sich der Kopf-Gassack (10) in aufgeblasenem Zustand bis in den unteren Seitenscheibenbereich erstreckt und sich zu seinen Enden (12, 14) verjüngt.

25. Seitenaufprall-Schutzeinrichtung nach einem der vorstehenden Ansprüche, dadurch gekennzeichnet, daß der Kopf-Gassack (10) im nichtaufgeblasenen Zustand in Längsrichtung ungefaltet am Fahrzeug befestigt ist.

26. Seitenaufprall-Schutzeinrichtung nach einem der vorstehenden Ansprüche, dadurch gekennzeichnet, daß der Kopf-Gassack (10) in aufgeblasenem Zustand aus mehreren kissenförmigen Elementen besteht.

27. Seitenaufprall-Schutzeinrichtung nach Anspruch 26, dadurch gekennzeichnet, daß die kissenförmigen Elemente miteinander in Strömungsverbindung stehen.

28. Seitenaufprall-Schutzeinrichtung nach einem der vorstehenden Ansprüche, dadurch gekennzeichnet, daß ein oder mehrere Gasgeneratoren (60) an der A- und/oder der C-Säule (20, 40) eines Fahrzeugs befestigt sind und über entsprechende Gaseintrittsöffnungen (16) an einem der Enden (12) des Kopf-Gassacks (10) mit dem Gassackinneren in Verbindung stehen.

29. Seitenaufprall-Schutzeinrichtung nach Anspruch 28, dadurch gekennzeichnet, daß ein oder mehrere Gasgeneratoren (60) seitlich des Armaturenbretts oder im Rückenlehnenbereich des Rücksitzes versteckt angeordnet sind.

30. Seitenaufprall-Schutzeinrichtung nach einem der vorhergehenden Ansprüche, dadurch gekennzeichnet, daß der Kopf-Gassack (10) mindestens ein ihn im aufgeblasenen Zustand teilweise einschnürendes Element (38) aufweist, durch das der untere Rand des Kopf-Gassacks (10) im aufgeblasenen Zustand, quer zur Fahrzeuglängsrichtung gesehen, eine Einbuchtung erhält.

## Patentansprüche (Patentansprüche für folgende(n) Vertragsstaat(en): IT)

1. Seitenaufprall-Schutzeinrichtung für Fahrzeuginsassen, mit einem Kopf-Gassack (10), dadurch gekennzeichnet, daß sich der langgestreckte, für einen Front- und einen Heckinsassen vorgesehene, Kopf-Gassack (10) in aufgeblasenem Zustand von einem Bereich seitlich eines Frontinsassen bis in einen Bereich seitlich eines Heckinsassen erstreckt und an einem Ende (12) an der A-Säule (20) und an einem entgegengesetzten Ende (14) an der C-Säule (40) eines Fahrzeugs befestigt ist.

2. Seitenaufprall-Schutzeinrichtung für Fahrzeuginsassen, insbesondere nach Anspruch 1, mit einem Kopf-Gassack (10), dadurch gekennzeichnet, daß sich der langgestreckte, für einen Front- und einen Heckinsassen vorgesehene, Kopf-Gassack (10) in aufgeblasenem Zustand von einem Bereich seitlich eines Frontinsassen bis in einen Bereich seitlich eines Heckinsassen erstreckt und im gefalteten Zustand bogenförmig verlaufend in das Fahrzeug längs der A-Säule (20) und längs des Dachrahmens (30) bis zur C-Säule (40) eingebaut ist.

3. Seitenaufprall-Schutzeinrichtung nach Anspruch 1 oder 2, dadurch gekennzeichnet, daß sich der Kopf-Gassack (10) in gefaltetem Zustand längs zumindest eines Teils der A-Säule (20), längs des Dachrahmens (30) und längs zumindest eines Teils der C-Säule (40) eines Fahrzeugs erstreckt.

4. Seitenaufprall-Schutzeinrichtung nach einem der vorstehenden Ansprüche, dadurch gekennzeichnet, daß sich der Kopf-Gassack (10) in gefaltetem Zustand von einem unteren Ende der A-Säule (20) bis zu einem unteren Ende der C-Säule (40) erstreckt.

5. Seitenaufprall-Schutzeinrichtung nach einem der vorstehenden Ansprüche, dadurch gekennzeichnet, daß sich der Kopf-Gassack (10) in aufgeblasenem Zustand von der A-Säule (20) bis zur C-Säule (40) eines Fahrzeugs erstreckt.

6. Seitenaufprall-Schutzeinrichtung nach einem der vorstehenden Ansprüche, dadurch gekennzeichnet, daß der Kopf-Gassack (10) an seinem in aufgeblasenem Zustand oberen Rand an der A-Säule (20), am Dachrahmen (30) und an der C-Säule (40) eines Fahrzeugs befestigt ist.

7. Seitenaufprall-Schutzeinrichtung für Fahrzeuginsassen, nach einem der vorstehenden Ansprüche, dadurch gekennzeichnet, daß ein oder mehrere Gasgeneratoren (60) an der A- und/oder der C-Säule (20, 40) eines Fahrzeugs befestigt sind und über entsprechende Gaseintrittsöffnungen (16) an einem der Enden (12) des Kopf-Gassacks (10) mit dem Gassackinneren in Verbindung stehen.

8. Seitenaufprall-Schutzeinrichtung nach Anspruch 7, dadurch gekennzeichnet, daß ein oder mehrere Gasgeneratoren (60) seitlich des Armaturenbretts oder im Rückenlehnenbereich des Rücksitzes versteckt angeordnet sind.

9. Seitenaufprall-Schutzeinrichtung für Fahrzeuginsassen, insbesondere nach einem der vorstehenden Ansprüche, mit einem Kopf-Gassack (10), dadurch gekennzeichnet, daß sich der langgestreckte, für einen Front- und einen Heckinsassen vorgesehene, Kopf-Gassack (10) in aufgeblasenem Zustand von einem Bereich seitlich eines Frontinsassen bis in einen Bereich seitlich eines Heckinsassen erstreckt und daß der Kopf-Gassack (10) in gefaltetem Zustand in einem Montageschlauch (22) angeordnet ist.

10. Seitenaufprall-Schutzeinrichtung nach Anspruch 9, dadurch gekennzeichnet, daß der Montageschlauch (22) innenseitig beschichtet ist.

11. Seitenaufprall-Schutzeinrichtung nach Anspruch 9 oder 10, dadurch gekennzeichnet, daß sich der Montageschlauch (22) von einem unteren Ende der A-Säule (20) bis zur C-Säule (40) erstreckt.

12. Seitenaufprall-Schutzeinrichtung nach einem der Ansprüche 9 bis 11, dadurch gekennzeichnet, daß der Montageschlauch (22) am Fahrzeug und der Kopf-Gassack (10) längs seines in aufgeblasenem Zustand oberen Randes am Fahrzeug befestigt ist.

13. Seitenaufprall-Schutzeinrichtung nach einem der Ansprüche 9 bis 12, dadurch gekennzeichnet, daß der Montageschlauch (22) eine in Längsrichtung verlaufende, schlitzartige Austrittsöffnung (34) hat, die in montiertem Zustand des Montageschlauchs (22) zur Seitenscheibe (24) weist.

14. Seitenaufprall-Schutzeinrichtung nach einem der Ansprüche 9 bis 13, dadurch gekennzeichnet, daß der Montageschlauch (22) aus flexiblem Material ist.

15. Seitenaufprall-Schutzeinrichtung für Fahrzeuginsassen nach einem der vorstehenden Ansprüche, dadurch gekennzeichnet, daß die Schutzeinrichtung als in das Fahrzeug nachträglich einbaubare Einheit ausgebildet ist.

16. Seitenaufprall-Schutzeinrichtung für Fahrzeuginsassen nach einem der vorstehenden Ansprüche, dadurch gekennzeichnet, daß sich der Kopf-Gassack (10) in aufgeblasenem Zustand zwischen seinen Befestigungsstellen verspannt.

17. Seitenaufprall-Schutzeinrichtung nach Anspruch 16, dadurch gekennzeichnet, daß sich der Kopf-Seitengassack (10) in aufgeblasenem Zustand zwischen seinen Befestigungsstellen an der A-Säule (20) und der C-Säule (40) verspannt.

18. Seitenaufprall-Schutzeinrichtung nach Anpspruch 16, dadurch gekennzeichnet, daß sich der Kopf-Gassack (10) zwischen seinen bogenförmig angeordneten Befestigungsstellen im aufgeblasenen Zustand verspannt.

19. Seitenaufprall-Schutzeinrichtung nach einem der vorstehenden Ansprüche, dadurch gekennzeichnet, daß der Kopf-Gassack (10) mindestens ein ihn im aufgeblasenen Zustand teilweise einschnürendes Element (38) aufweist, das quer zur Längsrichtung des Gassacks verläuft und den Kopf-Gassack (10) beim Aufblasen in Längsrichtung verkürzt.

20. Seitenaufprall-Schutzeinrichtung nach Anspruch 19, dadurch gekennzeichnet, daß das einschnürende Element (38) an der Wandung des Kopf-Gassacks (10) befestigt und schnur- oder bandartig ausgebildet ist.

21. Seitenaufprall-Schutzeinrichtung nach Anspruch 19 oder 20, dadurch gekennzeichnet, daß das Element (38) den unteren Randbereich (42) des Kopf-Gassacks (10) einschnürt.

22. Seitenaufprall-Schutzeinrichtung nach einem der vorstehenden Ansprüche, dadurch gekennzeichnet, daß sich der Kopf-Gassack (10) in aufgeblasenem Zustand bis in den unteren Seitenscheibenbereich erstreckt und sich zu seinen Enden (12, 14) verjüngt.

23. Seitenaufprall-Schutzeinrichtung für Fahrzeuginsassen nach einem der vorstehenden Ansprüche, dadurch gekennzeichnet, daß der Kopf-Gassack (10) über ein sich verjüngendes Ende (12, 14) mit einem Gasgenerator (60) in Strömungsverbindung steht.

24. Seitenaufprall-Schutzeinrichtunq für Fahrzeuginsassen nach einem der vorstehenden Ansprüche, dadurch gekennzeichnet, daß eine an der Gassackinnenwand anliegende Folie vorgesehen ist, die so ausgebildet ist, daß der Kopf-Gassack (10) über mehrere Sekunden hinweg aufgeblasen bleibt.

25. Seitenaufprall-Schutzeinrichtung nach einem der vorstehenden Ansprüche, dadurch gekennzeichnet, daß im Gassackinneren eine an der Gassackinnenwand anliegende, wärmebeständige Folie vorhanden ist, die so angeordnet und dimensioniert ist, daß sie in aufgeblasenem Zustand des Kopf-Gassacks (10) nicht auf Zug belastet ist.

26. Seitenaufprall-Schutzeinrichtung für Fahrzeuginsassen nach einem der vorstehenden Ansprüche, dadurch gekennzeichnet, daß der Kopf-Gassack (10) im nichtaufgeblasenen Zustand in Längsrichtung ungefaltet am Fahrzeug befestigt ist.

27. Seitenaufprall-Schutzeinrichtung nach einem der vorstehenden Ansprüche, dadurch gekennzeichnet, daß der Kopf-Gassack (10) in aufgeblasenem Zustand aus mehreren kissenförmigen Elementen besteht.

28. Seitenaufprall-Schutzeinrichtung nach Anspruch 27, dadurch gekennzeichnet, daß die kissenförmigen Elemente miteinander in Strömungsverbindung stehen.

29. Seitenaufprall-Schutzeinrichtung für Fahrzeuginsassen nach einem der vorhergehenden Ansprüche, dadurch gekennzeichnet, daß der Kopf-Gassack (10) mindestens ein ihn im aufgeblasenen Zustand teilweise einschnürendes Element (38) aufweist, durch das der untere Rand des Kopf-Gassacks (10) im aufgeblasenen Zustand, quer zur Fahrzeuglängsrichtung gesehen, eine Einbuchtung erhält.

## Patentansprüche (Patentansprüche für folgende(n) Vertragsstaat(en): ES)

1. Seitenaufprall-Schutzeinrichtung für Fahrzeuginsassen, mit einem Kopf-Gassack (10), dadurch gekennzeichnet, daß sich der langgestreckte, für einen Front- und einen Heckinsassen vorgesehene, Kopf-Gassack (10) in aufgeblasenem Zustand von einem Bereich seitlich eines Frontinsassen bis in einen Bereich seitlich eines Heckinsassen erstreckt und daß der Kopf-Gassack (10) in gefaltetem Zustand in einem Montageschlauch (22) angeordnet ist.

2. Seitenaufprall-Schutzeinrichtung nach Anspruch 1, dadurch gekennzeichnet, daß ein oder mehrere Gasgeneratoren (60) an der A- und/oder der C-Säule (20, 40) eines Fahrzeugs befestigt sind und über entsprechende Gaseintrittsöffnungen (16) an einem der Enden (12) des Kopf-Gassacks (10) mit dem Gassackinneren in Verbindung stehen.

3. Seitenaufprall-Schutzeinrichtung nach Anspruch 2, dadurch gekennzeichnet, daß ein oder mehrere Gasgeneratoren (60) seitlich des Armaturenbretts oder im Rückenlehnenbereich des Rücksitzes versteckt angeordnet sind.

4. Seitenaufprall-Schutzeinrichtung nach Anspruch 3, dadurch gekennzeichnet, daß der Montageschlauch (22) innenseitig beschichtet ist.

5. Seitenaufprall-Schutzeinrichtung nach Anspruch 3 oder 4, dadurch gekennzeichnet, daß sich der Montageschlauch (22) von einem unteren Ende der A-Säule (20) bis zur C-Säule (40) des Fahrzeugs erstreckt.

6. Seitenaufprall-Schutzeinrichtung nach einem der Ansprüche 3 bis 5, dadurch gekennzeichnet, daß der Montageschlauch (22) am Fahrzeug und der Kopf-Gassack (10) längs seines in aufgeblasenem Zustand oberen Randes am Fahrzeug befestigt ist.

7. Seitenaufprall-Schutzeinrichtung nach einem der Ansprüche 3 bis 6, dadurch gekennzeichnet, daß der Montageschlauch (22) eine in Längsrichtung verlaufende, schlitzartige Austrittsöffnung (34) hat, die in montiertem Zustand des Montageschlauchs (22) zur Seitenscheibe (24) weist.

8. Seitenaufprall-Schutzeinrichtung nach einem der Ansprüche 3 bis 7, dadurch gekennzeichnet, daß der Montageschlauch (22) aus flexiblem Material ist.

9. Seitenaufprall-Schutzeinrichtung nach einem der vorstehenden Ansprüche, dadurch gekennzeichnet, daß die Schutzeinrichtung als in das Fahrzeug nachträglich einbaubare Einheit ausgebildet ist.

10. Seitenaufprall-Schutzeinrichtung nach einem der vorstehenden Ansprüche, dadurch gekennzeichnet, daß der Kopf-Gassack (10) an einem Ende (12) an der A-Säule (20) und an einem entgegengesetzten Ende (14) an der C-Säule (40) befestigt ist.

11. Seitenaufprall-Schutzeinrichtung nach einem der vorstehenden Ansprüche, dadurch gekennzeichnet, daß der Kopf-Gassack (10) im gefalteten Zustand bogenförmig verlaufend in das Fahrzeug längs der A-Säule (20), längs des Dachrahmens (30) bis zur C-Säule (40) eingebaut ist.

12. Seitenaufprall-Schutzeinrichtung nach Anspruch 11, dadurch gekennzeichnet, daß sich der Kopf-Gassack (10) in gefaltetem Zustand längs zumindest eines Teils der A-Säule (20), längs des Dachrahmens (30) und längs zumindest eines Teils der C-Säule (40) eines Fahrzeugs erstreckt.

13. Seitenaufprall-Schutzeinrichtung nach Anspruch 12, dadurch gekennzeichnet, daß sich der Kopf-Gassack (10) in gefaltetem Zustand von einem unteren Ende der A-Säule (20) bis zu einem unteren Ende der C-Säule (40) erstreckt.

14. Seitenaufprall-Schutzeinrichtung nach einem der vorstehenden Ansprüche, dadurch gekennzeichnet, daß sich der Kopf-Gassack (10) in aufgeblasenem Zustand von der A-Säule (20) bis zur C-Säule (40) eines Fahrzeugs erstreckt.

15. Seitenaufprall-Schutzeinrichtung nach einem der vorstehenden Ansprüche, dadurch gekennzeichnet, daß der Kopf-Gassack (10) an seinem in aufgeblasenem Zustand oberen Rand an der A-Säule (20), am Dachrahmen (30) und an der C-Säule (40) eines Fahrzeugs befestigt ist.

16. Seitenaufprall-Schutzeinrichtung nach einem der vorstehenden Ansprüche, dadurch gekennzeichnet, daß sich der Kopf-Gassack (10) in aufgeblasenem Zustand zwischen seinen Befestigungsstellen verspannt.

17. Seitenaufprall-Schutzeinrichtung nach Anspruch 16, dadurch gekennzeichnet, daß sich der Kopf-Seitengassack (10) in aufgeblasenem Zustand zwischen seinen Befestigungsstellen an der A-Säule (20) und der C-Säule (40) verspannt.

18. Seitenaufprall-Schutzeinrichtung nach einem der vorhergehenden Ansprüche, dadurch gekennzeichnet, daß sich der Kopf-Gassack (10) zwischen seinen bogenförmig angeordneten Befestigungsstellen im aufgeblasenen Zustand verspannt.

19. Seitenaufprall-Schutzeinrichtung nach einem der vorstehenden Ansprüche, dadurch gekennzeichnet, daß der Kopf-Gassack (10) mindestens ein ihn im aufgeblasenen Zustand teilweise einschnürendes Element (38) aufweist, das quer zu seiner Längsrichtung verläuft und den Kopf-Gassack (10) beim Aufblasen in Längsrichtung verkürzt.

20. Seitenaufprall-Schutzeinrichtung nach Anspruch 19, dadurch gekennzeichnet, daß das einschnürende Element (38) an der Wandung des Kopf-Gassacks (10) befestigt und schnur- oder bandartig ausgebildet ist.

21. Seitenaufprall-Schutzeinrichtung nach Anspruch 19 oder 20, dadurch gekennzeichnet, daß das Element (38) den unteren Randbereich (42) des Kopf-Gassacks (10) einschnürt.

22. Seitenaufprall-Schutzeinrichtung nach einem der vorstehenden Ansprüche, dadurch gekennzeichnet, daß sich der Kopf-Gassack (10) in aufgeblasenem Zustand bis in den unteren Seitenscheibenbereich erstreckt und sich zu seinen Enden (12, 14) verjüngt.

23. Seitenaufprall-Schutzeinrichtung nach einem der vorstehenden Ansprüche dadurch gekennzeichnet, daß der Kopf-Gassack (10) über ein sich verjüngendes Ende (12, 14) mit einem Gasgenerator (60) in Strömungsverbindung steht.

24. Seitenaufprall-Schutzeinrichtung nach einem der vorstehenden Ansprüche, dadurch gekennzeichnet, daß eine an der Gassackwand anliegende Folie vorgesehen ist, die so ausgebildet ist, daß der Kopf-Gassack (10) über mehrere Sekunden hinweg aufgeblasen bleibt.

25. Seitenaufprall-Schutzeinrichtung nach einem der vorstehenden Ansprüche, dadurch gekennzeichnet, daß im Gassackinneren eine an der Gassackinnenwand anliegende, wärmebeständige Folie vorhanden ist, die so angeordnet und dimensioniert ist, daß sie in aufgeblasenem Zustand des Kopf-Gassacks (10) nicht auf Zug belastet ist.

26. Seitenaufprall-Schutzeinrichtung nach einem der vorstehenden Ansprüche, dadurch gekennzeichnet, daß der Kopf-Gassack (10) im nichtaufgeblasenen Zustand in Längsrichtung ungefaltet am Fahrzeug befestigt ist.

27. Seitenaufprall-Schutzeinrichtung nach einem der vorstehenden Ansprüche, dadurch gekennzeichnet, daß der Kopf-Gassack (10) in aufgeblasenem Zustand aus mehreren kissenförmigen Elementen besteht.

28. Seitenaufprall-Schutzeinrichtung nach Anspruch 27, dadurch gekennzeichnet, daß die kissenförmigen Elemente miteinander in Strömungsverbindung stehen.

29. Seitenaufprall-Schutzeinrichtung nach einem der vorhergehenden Ansprüche, dadurch gekennzeichnet, daß der Kopf-Gassack (10) mindestens ein ihn im aufgeblasenen Zustand teilweise einschnürendes Element (38) aufweist, durch das der untere Rand des Kopf-Gassacks (10) im aufgeblasenen Zustand, quer zur Fahrzeuglängsrichtung gesehen, eine Einbuchtung erhält.

## Patentansprüche (Patentansprüche für folgende(n) Vertragsstaat(en): SE)

1. Seitenaufprall-Schutzeinrichtung für Fahrzeuginsassen, mit einem Kopf-Gassack (10), dadurch gekennzeichnet, daß sich der langgestreckte, für einen Front- und einen Heckinsassen vorgesehene, Kopf-Gassack (10) in aufgeblasenem Zustand von einem Bereich seitlich eines Frontinsassen in Kopfhöhe durchgehend bis in einen Bereich seitlich eines Heckinsassen erstreckt und sich in aufgeblasenem Zustand zwischen seinen Befestigungspunkten im Fahrzeug verspannt.

2. Seitenaufprall-Schutzeinrichtung für Fahrzeuginsassen, insbesondere nach Anspruch 1, mit einem Kopf-Gassack (10), dadurch gekennzeichnet, daß sich der langgestreckte, für einen Front- und einen Heckinsassen vorgesehene, Kopf-Gassack (10) in aufgeblasenem Zustand von einem Bereich seitlich eines Frontinsassen bis in einen Bereich seitlich eines Heckinsassen erstreckt und im Bereich seines im aufgeblasenen Zustand unteren Randes an seinen Längsenden an Fahrzeugsäulen (20, 40) befestigt ist und sich zwischen seinen Längsenden verspannt.

3. Seitenaufprall-Schutzeinrichtung nach Anspruch 1 oder 2, dadurch gekennzeichnet, daß sich der Kopf-Gassack (10) in aufgeblasenem Zustand zwischen seinen Befestigungsstellen an der A-Säule (20) und der C-Säule (40) verspannt.

4. Seitenaufprall-Schutzeinrichtung nach einem der vorstehenden Ansprüche, mit einem Kopf-Gassack (10), dadurch gekennzeichnet, daß der Kopf-Gassack (10) in gefaltetem Zustand in einem Montageschlauch (22) angeordnet ist.

5. Seitenaufprall-Schutzeinrichtung nach Anspruch 4, dadurch gekennzeichnet, daß der Montageschlauch (22) innenseitig beschichtet ist.

6. Seitenaufprall-Schutzeinrichtung nach Anspruch 4 oder 5, dadurch gekennzeichnet, daß sich der Montageschlauch (22) von einem unteren Ende der A-Säule (20) bis zur C-Säule (40) des Fahrzeugs erstreckt.

7. Seitenaufprall-Schutzeinrichtung nach einem der Ansprüche 4 bis 6, dadurch gekennzeichnet, daß der Montageschlauch (22) am Fahrzeug und der Kopf-Gassack (10) längs seines in aufgeblasenem Zustand oberen Randes am Fahrzeug befestigt ist.

8. Seitenaufprall-Schutzeinrichtung nach einem der Ansprüche 4 bis 7, dadurch gekennzeichnet, daß der Montageschlauch (22) eine in Längsrichtung verlaufende, schlitzartige Austrittsöffnung (34) hat, die in montiertem Zustand des Montageschlauchs (22) zur Seitenscheibe (24) weist.

9. Seitenaufprall-Schutzeinrichtung nach einem der Ansprüche 4 bis 8, dadurch gekennzeichnet, daß der Montageschlauch (22) aus flexiblem Material ist.

10. Seitenaufprall-Schutzeinrichtung nach einem der vorstehenden Ansprüche, dadurch gekennzeichnet, daß die Schutzeinrichtung als in das Fahrzeug nachträglich einbaubare Einheit ausgebildet ist.

11. Seitenaufprall-Schutzeinrichtung nach einem der vorstehenden Ansprüche, dadurch gekennzeichnet, daß der Kopf-Gassack (10) an einem Ende (12) an der A-Säule (20) und an einem entgegengesetzten Ende (14) an der C-Säule (40) befestigt ist.

12. Seitenaufprall-Schutzeinrichtung nach einem der vorstehenden Ansprüche, dadurch gekennzeichnet, daß der Kopf-Gassack (10) im gefalteten Zustand bogenförmig verlaufend in das Fahrzeug längs der A-Säule (20), längs des Dachrahmens (30) bis zur C-Säule (40) eingebaut ist.

13. Seitenaufprall-Schutzeinrichtung nach Anspruch 12, dadurch gekennzeichnet, daß sich der Kopf-Gassack (10) in gefaltetem Zustand längs zumindest eines Teils der A-Säule (20), längs des Dachrahmens (30) und längs zumindest eines Teils der C-Säule (40) eines Fahrzeugs erstreckt.

14. Seitenaufprall-Schutzeinrichtung nach Anspruch 13, dadurch gekennzeichnet, daß sich der Kopf-Gassack (10) in gefaltetem Zustand von einem unteren Ende der A-Säule (20) bis zu einem unteren Ende der C-Säule (40) erstreckt.

15. Seitenaufprall-Schutzeinrichtung nach einem der vorstehenden Ansprüche, dadurch gekennzeichnet, daß sich der Kopf-Gassack (10) in aufgeblasenem Zustand von der A-Säule (20) bis zur C-Säule (40) eines Fahrzeugs erstreckt.

16. Seitenaufprall-Schutzeinrichtung nach einem der vorstehenden Ansprüche, dadurch gekennzeichnet, daß der Kopf-Gassack (10) an seinem in aufgeblasenem Zustand oberen Rand an der A-Säule (20), am Dachrahmen (30) und an der C-Säule (40) eines Fahrzeugs befestigt ist.

17. Seitenaufprall-Schutzeinrichtung nach einem der vorstehenden Ansprüche, dadurch gekennzeichnet, daß der Kopf-Gassack (10) mindestens ein ihn im aufgeblasenen Zustand teilweise einschnürendes Element (38) aufweist, das quer zu seiner Längsrichtung verläuft und den Kopf-Gassack (10) beim Aufblasen in Längsrichtung verkürzt.

18. Seitenaufprall-Schutzeinrichtung nach Anspruch 17, dadurch gekennzeichnet, daß das einschnürende Element (38) an der Wandung des Kopf-Gassacks (10) befestigt und schnur- oder bandartig ausgebildet ist.

19. Seitenaufprall-Schutzeinrichtung nach Anspruch 17 oder 18, dadurch gekennzeichnet, daß das Element (38) den unteren Randbereich (42) des Kopf-Gassacks (10) einschnürt.

20. Seitenaufprall-Schutzeinrichtung nach einem der vorstehenden Ansprüche, dadurch gekennzeichnet, daß sich der Kopf-Gassack (10) in aufgeblasenem Zustand bis in den unteren Seitenscheibenbereich erstreckt und sich zu seinen Enden (12, 14) verjüngt.

21. Seitenaufprall-Schutzeinrichtung nach einem der vorstehenden Ansprüche, dadurch gekennzeichnet, daß der Kopf-Gassack (10) über ein sich verjüngendes Ende (12, 14) mit einem Gasgenerator (60) in Strömungsverbindung steht.

22. Seitenaufprall-Schutzeinrichtung nach einem der vorstehenden Ansprüche, dadurch gekennzeichnet, daß eine an der Gassackwand anliegende Folie vorgesehen ist, die so ausgebildet ist, daß der Kopf-Gassack (10) über mehrere Sekunden hinweg aufgeblasen bleibt.

23. Seitenaufprall-Schutzeinrichtung nach einem der vorstehenden Ansprüche, dadurch gekennzeichnet, daß im Gassackinneren eine an der Gassackinnenwand anliegende, wärmebeständige Folie vorhanden ist, die so angeordnet und dimensioniert ist, daß sie in aufgeblasenem Zustand des Kopf-Gassacks (10) nicht auf Zug belastet ist.

24. Seitenaufprall-Schutzeinrichtung nach einem der vorstehenden Ansprüche, dadurch gekennzeichnet, daß der Kopf-Gassack (10) im nichtaufgeblasenen Zustand in Längsrichtung ungefaltet am Fahrzeug befestigt ist.

25. Seitenaufprall-Schutzeinrichtung nach einem der vorstehenden Ansprüche, dadurch gekennzeichnet, daß der Kopf-Gassack (10) in aufgeblasenem Zustand aus mehreren kissenförmigen Elementen besteht.

26. Seitenaufprall-Schutzeinrichtung nach Anspruch 25, dadurch gekennzeichnet, daß die kissenförmigen Elemente miteinander in Strömungsverbindung stehen.

27. Seitenaufprall-Schutzeinrichtung nach einem der vorstehenden Ansprüche, dadurch gekennzeichnet, daß ein oder mehrere Gasgeneratoren (60) an der A- und/oder der C-Säule (20, 40) eines Fahrzeugs befestigt sind und über entsprechende Gaseintrittsöffnungen (16) an einem der Enden (12) des Kopf-Gassacks (10) mit dem Gassackinneren in Verbindung stehen.

28. Seitenaufprall-Schutzeinrichtung nach Anspruch 7, dadurch gekennzeichnet, daß ein oder mehrere Gasgeneratoren (60) seitlich des Armaturenbretts oder im Rückenlehnenbereich des Rücksitzes versteckt angeordnet sind.

29. Seitenaufprall-Schutzeinrichtung nach einem der vorhergehenden Ansprüche, dadurch gekennzeichnet, daß der Kopf-Gassack (10) mindestens ein ihn im aufgeblasenen Zustand teilweise einschnürendes Element (38) aufweist, durch das der untere Rand des Kopf-Gassacks (10) im aufgeblasenen Zustand, quer zur Fahrzeuglängsrichtung gesehen, eine Einbuchtung erhält.

## Claims (Claims for the following Contracting State(s): DE, FR, GB)

1. A lateral impact protective device for vehicle occupants, comprising a head gas bag (10), characterized in that in the inflated condition the elongated head gas bag (10) provided for a front occupant and a rear occupant extends from a region to the side of a front occupant into a region to the side of a rear occupant and in the folded condition is arranged in a mounting envelope (22).

2. The lateral impact protective device as claimed in claim 1, characterized in that the mounting envelope (22) is coated on its inside.

3. The lateral impact protective device as claimed in claim 1 or 2, characterized in that the mounting envelope (22) extends from a lower end of the A-column (20) to the C-column (40).

4. The lateral impact protective device as claimed in any of the preceding claims, characterized in that the mounting envelope (22) is attached to the vehicle and the head gas bag (10) is attached to the vehicle along an edge which is the upper edge of the gas bag in the inflated condition.

5. The lateral impact protective device as claimed in any of the preceding claims, characterized in that the mounting envelope (22) has a slot-like outlet opening (34) which extends in the longitudinal direction and which, in the installed condition of the mounting envelope (22), points toward the side window (24).

6. The lateral impact protective device as claimed in any of the preceding claims, characterized in that the mounting envelope (22) is made of a flexible material.

7. A lateral impact protective device as claimed in any of the preceding claims, characterized in that in the inflated condition the elongated head gas bag (10) continuously extends at head level from a region to the side of a front occupant into a region to the side of a rear occupant and in the region of an edge of the gas bag which is the lower edge in the inflated condition is only attached to the A-column and to the C-column (20, 40) of the vehicle along its longitudinal ends, and in the inflated condition tensions itself between its points of attachment on the A-column and on the C-column (20, 40).

8. The lateral impact protective device as claimed in any of the preceding claims, characterized in that the protective device is designed as a unit to be subsequently installed in the vehicle.

9. The lateral impact protective device as claimed in any of the preceding claims, characterized in that is in flow connection with a gas generator (60) via a tapered end (12, 14) the head gas bag (10).

10. The lateral impact protective device as claimed in any of the preceding claims, characterized in that there is provided a foil lying on the gas bag wall, which foil is formed such that the head gas bag (10) remains inflated for several seconds.

11. The lateral impact protective device as claimed in any of the preceding claims, characterized in that in the interior of the gas bag there is provided a heat-resistant foil lying on the inner wall of the gas bag, which foil is arranged and dimensioned such that in the inflated condition of the head gas bag (10) it is not subjected to a tensile load.

12. The lateral impact protective device as claimed in any of the preceding claims, characterized in that the head gas bag (10) is attached at one end (12) to the A-column (20) and at an opposite end (14) to the C-column (40).

13. The lateral impact protective device as claimed in any of the preceding claims, characterized in that in the folded condition the head gas bag (10) is installed in the vehicle to extend in the shape of an arc along the A-column (20) and along the roof frame (30) to the C-column (40).

14. The lateral impact protective device as claimed in any of the preceding claims, characterized in that in the folded condition the head gas bag (10) extends along at least a part of the A-column (20), along the roof frame (30) and along at least a part of the C-column (40) of a vehicle.

15. The lateral impact protective device as claimed in any of the preceding claims, characterized in that in the folded condition the head gas bag (10) extends from a lower end of the A-column (20) to a lower end of the C-column (40).

16. The lateral impact protective device as claimed in any of the preceding claims, characterized in that in the inflated condition the head gas bag (10) extends from the A-column (20) to the C-column (40) of a vehicle.

17. The lateral impact protective device as claimed in any of the preceding claims, characterized in that the head gas bag (10) is attached to the A-column (20), to the roof frame (30) and to the C-column (40) of a vehicle along an edge which is the upper edge of the gas bag in the inflated condition.

18. The lateral impact protective device as claimed in any of the preceding claims, characterized in that in the inflated condition the head gas bag (10) tensions itself between its points of attachment.

19. The lateral impact protective device as claimed in claim 18, characterized in that in the inflated condition the head side gas bag (10) tensions itself between its points of attachment on the A-column (20) and the C-column (40).

20. The lateral impact protective device as claimed in claim 18, characterized in that in the inflated condition the head gas bag (10) tensions itself between its points of attachment arranged in the shape of an arc.

21. The lateral impact protective device as claimed in any of the preceding claims, characterized in that the head gas bag (10) includes at least one member (38) partially constricting the head gas bag in the inflated condition thereof, said member extending transversely to the longitudinal direction of the head gas bag and shortening the head gas bag (10) in the longitudinal direction during inflation.

22. The lateral impact protective device as claimed in claim 21, characterized in that the constricting member (38) is attached to the wall of the head gas bag (10) and is formed like a cord or ribbon.

23. The lateral impact protective device as claimed in claim 21 or 22, characterized in that the member (38) constricts the lower edge portion (42) of the head gas bag (10).

24. The lateral impact protective device as claimed in any of the preceding claims, characterized in that in the inflated condition the head gas bag (10) extends into the lower region of the side window and is tapered toward its ends (12, 14).

25. The lateral impact protective device as claimed in any of the preceding claims, characterized in that in the non-inflated condition the head gas bag (10) is attached to the vehicle so as not to be folded in longitudinal direction.

26. The lateral impact protective device as claimed in any of the preceding claims, characterized in that in the inflated condition the head gas bag (10) consists of several cushion-shaped elements.

27. The lateral impact protective device as claimed in claim 26, characterized in that the cushion-shaped elements are in flow connection with each other.

28. The lateral impact protective device as claimed in any of the preceding claims, characterized in that one or more gas generators (60) are attached to the A-column and/or the C-column (20, 40) of a vehicle and communicate with the interior of the gas bag via corresponding gas inlet openings (16) at one of the ends (12) of the head gas bag (10).

29. The lateral impact protective device as claimed in claim 28, characterized in that one or more gas generators (60) are concealed to the side of the dashboard or in the vicinity of the back rest of the rear seat.

30. The lateral impact protective device as claimed in any of the preceding claims, characterized in that the head gas bag (10) includes at least one member (38) partially constricting the head gas bag in the inflated condition, by which member the lower edge of the head gas bag (10), when inflated, receives an indentation, seen transverse to the longitudinal direction of the vehicle.

## Claims (Claims for the following Contracting State(s): IT)

1. A lateral impact protective device for vehicle occupants, comprising a head gas bag (10), characterized in that in the inflated condition the elongated head gas bag (10) provided for a front occupant and a rear occupant extends from a region to the side of a front occupant into a region to the side of a rear occupant and is attached at one end (12) to the A-column (20) and at an opposite end (14) to the C-column (40) of a vehicle.

2. The lateral impact protective device for vehicle occupants, particularly as claimed in claim 1, comprising a head gas bag (10), characterized in that in the inflated condition the elongated head gas bag (10) provided for a front occupant and a rear occupant extends from a region to the side of a front occupant into a region to the side of a rear occupant and, in the folded condition, is installed in the vehicle to extend in the shape of an arc along the A-column (20) and along the roof frame (30) to the C-column (40).

3. The lateral impact protective device as claimed in claim 1 or 2, characterized in that in the folded condition the head gas bag (10) extends along at least a part of the A-column (20), along the roof frame (30) and along at least a part of the C-column (40) of a vehicle.

4. The lateral impact protective device as claimed in any of the preceding claims, characterized in that in the folded condition the head gas bag (10) extends from a lower end of the A-column (20) to a lower end of the C-column (40).

5. The lateral impact protective device as claimed in any of the preceding claims, characterized in that in the inflated condition the head gas bag (10) extends from the A-column (20) to the C-column (40) of a vehicle.

6. The lateral impact protective device as claimed in any of the preceding claims, characterized in that the head gas bag (10) is attached to the A-column (20), to the roof frame (30) and to the C-column (40) of a vehicle along an edge which is the upper edge of the gas bag in the inflated condition.

7. The lateral impact protective device for vehicle occupants as claims in any of the preceding claims, characterized in that one or more gas generators (60) are attached to the A-column and/or the C-column (20, 40) of a vehicle and communicate with the interior of the gas bag via corresponding gas inlet openings (16) at one of the ends (12) of the head gas bag (10).

8. The lateral impact protective device as claimed in claim 7, characterized in that one or more gas generators (60) are concealed to the side of the dashboard or in the vicinity of the back rest of the rear seat.

9. The lateral impact protective device for vehicle occupants, particularly as claimed in any of the preceding claims, comprising a head gas bag (10), characterized in that in the inflated condition the elongated head gas bag (10) provided for a front occupant and a rear occupant extends from a region to the side of a front occupant into a region to the side of a rear occupant, and that in the folded condition the head gas bag (10) is arranged in a mounting envelope (22).

10. The lateral impact protective device as claimed in claim 9, characterized in that the mounting envelope (22) is coated on its inside.

11. The lateral impact protective device as claimed in claim 9 or 10, characterized in that the mounting envelope (22) extends from a lower end of the A-column (20) to the C-column (40).

12. The lateral impact protective device as claimed in any of claims 9 to 11, characterized in that the mounting envelope (22) is attached to the vehicle and the head gas bag (10) is attached to the vehicle along an edge which is the upper edge of the gas bag in the inflated condition.

13. The lateral impact protective device as claimed in any of claims 9 to 12, characterized in that the mounting envelope (22) has a slot-like outlet opening (34) which extends in the longitudinal direction and which, in the installed condition of the mounting envelope (22), points toward the side window (24).

14. The lateral impact protective device as claimed in any of claims 9 to 13, characterized in that the mounting envelope (22) is made of a flexible material.

15. The lateral impact protective device for vehicle occupants as claimed in any of the preceding claims, characterized in that the protective device is designed as a unit to be subsequently installed in the vehicle.

16. The lateral impact protective device for vehicle occupants as claimed in any of the preceding claims, characterized in that in the inflated condition the head gas bag (10) tensions itself between its points of attachment.

17. The lateral impact protective device as claimed in claim 16, characterized in that in the inflated condition the head side gas bag (10) tensions itself between its points of attachment on the A-column (20) and the C-column (40).

18. The lateral impact protective device as claimed in claim 16, characterized in that in the inflated condition the head gas bag (10) tensions itself between its points of attachment arranged in the shape of an arc.

19. The lateral impact protective device as claimed in any of the preceding claims, characterized in that the head gas bag (10) includes at least one member (38) partially constricting the head gas bag in the inflated condition thereof, said member extending transversely to the longitudinal direction of the head gas bag and shortening the head gas bag (10) in the longitudinal direction during inflation.

20. The lateral impact protective device as claimed in claim 19, characterized in that the constricting member (38) is attached to the wall of the head gas bag (10) and is formed like a cord or ribbon.

21. The lateral impact protective device as claimed in claim 19 or 20, characterized in that the member (38) constricts the lower edge portion (42) of the head gas bag (10).

22. The lateral impact protective device as claimed in any of the preceding claims, characterized in that in the inflated condition the head gas bag (10) extends into the lower region of the side window and is tapered toward its ends (12, 14).

23. The lateral impact protective device for vehicle occupants as claimed in any of the preceding claims, characterized in that the head gas bag (10) is in flow connection with a gas generator (60) via a tapered end (12, 14).

24. The lateral impact protective device for vehicle occupants as claimed in any of the preceding claims, characterized in that there is provided a foil lying on the inner wall of the gas bag, which foil is formed such that the head gas bag (10) remains inflated for several seconds.

25. The lateral impact protective device as claimed in any of the preceding claims, characterized in that in the interior of the gas bag there is provided a heat-resistant foil lying on the inner wall of the gas bag, which film is arranged and dimensioned such that in the inflated condition of the head gas bag (10) it is not subjected to a tensile load.

26. The lateral impact protective device for vehicle occupants as claimed in any of the preceding claims, characterized in that in the non-inflated condition the head gas bag (10) is attached to the vehicle so as not to be folded in longitudinal direction.

27. The lateral impact protective device as claimed in any of the preceding claims, characterized in that in the inflated condition the head gas bag (10) consists of several cushion-shaped elements.

28. The lateral impact protective device as claimed in claim 27, characterized in that the cushion-shaped elements are in flow connection with each other.

29. The lateral impact protective device for vehicle occupants as claimed in any of the preceding claims, characterized in that the head gas bag (10) includes at least one member (38) partially constricting the head gas bag in the inflated condition, by which member the lower edge of the head gas bag (10), when inflated, receives an indentation, seen transverse to the longitudinal direction of the vehicle.

## Claims (Claims for the following Contracting State(s): ES)

1. A lateral impact protective device for vehicle occupants, comprising a head gas bag (10), characterized in that in the inflated condition the elongated head gas bag (10) provided for a front occupant and a rear occupant extends from a region to the side of a front occupant into the region to the side of a rear occupant, and that in the folded condition the head gas bag (10) is arranged in a mounting envelope (22).

2. The lateral impact protective device as claimed in claim 1, characterized in that one or more gas generators (60) are attached to the A-column and/or the C-column (20, 40) of a vehicle and communicate with the interior of the gas bag via corresponding gas inlet openings (16) at one of the ends (12) of the head gas bag (10).

3. The lateral impact protective device as claimed in claim 2, characterized in that one or more gas generators (60) are concealed to the side of the dashboard or in the vicinity of the back rest of the rear seat.

4. The lateral impact protective device as claimed in claim 3, characterized in that the mounting envelope (22) is coated on its inside.

5. The lateral impact protective device as claimed in claim 3 or 4, characterized in that the mounting envelope (22) extends from a lower end of the A-column (20) to the C-column (40) of the vehicle.

6. The lateral impact protective device as claimed in any of claims 3 to 5, characterized in that the mounting envelope (22) is attached to the vehicle and the head gas bag (10) is attached to the vehicle along an edge which is the upper edge of the gas bag in the inflated condition.

7. The lateral impact protective device as claimed in any of claims 3 to 6, characterized in that the mounting envelope (22) has a slot-like outlet opening (34) which extends in the longitudinal direction and which, in the installed condition of the mounting envelope (22), points toward the side window (24).

8. The lateral impact protective device as claimed in any of claims 3 to 7, characterized in that the mounting envelope (22) is made of a flexible material.

9. The lateral impact protective device as claimed in any of the preceding claims, characterized in that the protective device is designed as a unit to be subsequently installed in the vehicle.

10. The lateral impact protective device as claimed in any of the preceding claims, characterized in that the head gas bag (10) is attached at one end (12) to the A-column (20) and at an opposite end (14) to the C-column (40).

11. The lateral impact protective device as claimed in any of the preceding claims, characterized in that in the folded condition the head gas bag (10) is installed in the vehicle to extend in the shape of an arc along the A-column (20) and along the roof frame (30) to the C-column (40).

12. The lateral impact protective device as claimed in claim 11, characterized in that in the folded condition the head gas bag (10) extends along at least a part of the A-column (20), along the roof frame (30) and along at least a part of the C-column (40) of a vehicle.

13. The lateral impact protective device as claimed in claim 12, characterized in that in the folded condition the head gas bag (10) extends from a lower end of the A-column (20) to a lower end of the C-column (40).

14. The lateral impact protective device as claimed in any of the preceding claims, characterized in that in the inflated condition the head gas bag (10) extends from the A-column (20) to the C-column (40) of a vehicle.

15. The lateral impact protective device as claimed in any of the preceding claims, characterized in that the head gas bag (10) is attached to the A-column (20), to the roof frame (30) and to the C-column (40) of a vehicle along an edge which is the upper edge of the gas bag in the inflated condition.

16. The lateral impact protective device as claimed in any of the preceding claims, characterized in that in the inflated condition the head gas bag (10) tensions itself between its points of attachment.

17. The lateral impact protective device as claimed in claim 16, characterized in that in the inflated condition the head side gas bag (10) tensions itself between its points of attachment on the A-column (20) and the C-column (40).

18. The lateral impact protective device as claimed in any of the preceding claims, characterized in that in the inflated condition the head gas bag (10) tensions itself between its points of attachment arranged in the shape of an arc.

19. The lateral impact protective device as claimed in any of the preceding claims, characterized in that the head gas bag (10) includes at least one member (38) partially constricting the head gas bag in the inflated condition thereof, said member extending transversely to the longitudinal direction of the head gas bag and shortening the head gas bag (10) in the longitudinal direction during inflation.

20. The lateral impact protective device as claimed in claim 19, characterized in that the constricting member (38) is attached to the wall of the head gas bag (10) and is formed like a cord or ribbon.

21. The lateral impact protective device as claimed in claim 19 or 20, characterized in that the member (38) constricts the lower edge portion (42) of the head gas bag (10).

22. The lateral impact protective device as claimed in any of the preceding claims, characterized in that in the inflated condition the head gas bag (10) extends into the lower region of the side window and is tapered toward its ends (12, 14).

23. The lateral impact protective device as claimed in any of the preceding claims, characterized in that the head gas bag (10) is in flow connection with a gas generator (60) via a tapered end (12, 14).

24. The lateral impact protective device as claimed in any of the preceding claims, characterized in that there is provided a foil lying on the gas bag wall, which foil is formed such that the head gas bag (10) remains inflated for several seconds.

25. The lateral impact protective device as claimed in any of the preceding claims, characterized in that in the interior of the gas bag there is provided a heat-resistant foil lying on the inner wall of the gas bag, which foil is arranged and dimensioned such that in the inflated condition of the head gas bag (10) it is not subjected to a tensile load.

26. The lateral impact protective device as claimed in any of the preceding claims, characterized in that in the non-inflated condition the head gas bag (10) is attached to the vehicle so as not to be folded in longitudinal direction.

27. The lateral impact protective device as claimed in any of the preceding claims, characterized in that in the inflated condition the head gas bag (10) consists of several cushion-shaped elements.

28. The lateral impact protective device as claimed in claim 27, characterized in that the cushion-shaped elements are in flow connection with each other.

29. The lateral impact protective device as claimed in any of the preceding claims, characterized in that the head gas bag (10) includes at least one member (38) partially constricting the head gas bag in the inflated condition, by which member the lower edge of the head gas bag (10), when inflated, receives an indentation, seen transverse to the longitudinal direction of the vehicle.

## Claims (Claims for the following Contracting State(s): SE)

1. A lateral impact protective device for vehicle occupants, comprising a head gas bag (10), characterized in that in the inflated condition the elongated head gas bag (10) provided for a front occupant and a rear occupant continuously extends at head level from a region to the side of a front occupant into a region to the side of a rear occupant and in the inflated condition tensions itself between its points of attachment in the vehicle.

2. The lateral impact protective device for vehicle occupants, particularly as claimed in claim 1, comprising a head gas bag (10), characterized in that in the inflated condition the elongated head gas bag (10) provided for a front occupant and a rear occupant extends from a region to the side of a front occupant into a region to the side of a rear occupant and is attached to vehicle columns (20, 40) at its longitudinal ends in the region of an edge which is the lower edge of the gas bag in the inflated condition, and tensions itself between its longitudinal ends.

3. The lateral impact protective device as claimed in claim 1 or 2, characterized in that in the inflated condition the head gas bag (10) tensions itself between its points of attachment on the A-column (20) and on the C-column (40).

4. The lateral impact protective device as claimed in any of the preceding claims, comprising a head gas bag (10), characterized in that in the folded condition the head gas bag (10) is arranged in a mounting envelope (22).

5. The lateral impact protective device as claimed in claim 4, characterized in that the mounting envelope (22) is coated on its inside.

6. The lateral impact protective device as claimed in claim 4 or 5, characterized in that the mounting envelope (22) extends from a lower end of the A-column (20) to the C-column (40) of the vehicle.

7. The lateral impact protective device as claimed in any of claims 4 to 6, characterized in that the mounting envelope (22) is attached to the vehicle and the head gas bag (10) is attached to the vehicle along an edge which is the upper edge of the gas bag in the inflated condition.

8. The lateral impact protective device as claimed in any of claims 4 to 7, characterized in that the mounting envelope (22) has a slot-like outlet opening (34) which extends in the longitudinal direction and which, in the installed condition of the mounting envelope (22), points toward the side window (24).

9. The lateral impact protective device as claimed in any of claims 4 to 8, characterized in that the mounting envelope (22) is made of a flexible material.

10. The lateral impact protective device as claimed in any of the preceding claims, characterized in that the protective device is designed as a unit to be subsequently installed in the vehicle.

11. The lateral impact protective device as claimed in any of the preceding claims, characterized in that the head gas bag (10) is attached at one end (12) to the A-column (20) and at an opposite end (14) to the C-column (40).

12. The lateral impact protective device as claimed in any of the preceding claims, characterized in that in the folded condition the head gas bag (10) is installed in the vehicle to extend in the shape of an arc along the A-column (20) and along the roof frame (30) to the C-column (40).

13. The lateral impact protective device as claimed in claim 12, characterized in that in the folded condition the head gas bag (10) extends along at least a part of the A-column (20), along the roof frame (30) and along at least a part of the C-column (40) of a vehicle.

14. The lateral impact protective device as claimed in claim 13, characterized in that in the folded condition the head gas bag (10) extends from a lower end of the A-column (20) to a lower end of the C-column (40).

15. The lateral impact protective device as claimed in any of the preceding claims, characterized in that in the inflated condition the head gas bag (10) extends from the A-column (20) to the C-column (40) of a vehicle.

16. The lateral impact protective device as claimed in any of the preceding claims, characterized in that the head gas bag (10) is attached to the A-column (20), to the roof frame (30) and to the C-column (40) of a vehicle along an edge which is the upper edge of the gas bag in the inflated condition.

17. The lateral impact protective device as claimed in any of the preceding claims, characterized in that the head gas bag (10) includes at least one member (38) partially constricting the head gas bag in the inflated condition thereof, said member extending transversely to the longitudinal direction of the head gas bag and shortening the head gas bag (10) in the longitudinal direction during inflation.

18. The lateral impact protective device as claimed in claim 17, characterized in that the constricting member (38) is attached to the wall of the head gas bag (10) and is formed like a cord or ribbon.

19. The lateral impact protective device as claimed in claim 17 or 18, characterized in that the member (38) constricts the lower edge portion (42) of the head gas bag (10).

20. The lateral impact protective device as claimed in any of the preceding claims, characterized in that in the inflated condition the head gas bag (10) extends into the lower region of the side window and is tapered towards its ends (12, 14).

21. The lateral impact protective device as claimed in any of the preceding claims, characterized in that the head gas bag (10) is in flow connection with a gas generator (60) via a tapered end (12, 14).

22. The lateral impact protective device as claimed in any of the preceding claims, characterized in that there is provided a foil lying on the gas bag wall, which foil is formed such that the head gas bag (10) remains inflated for several seconds.

23. The lateral impact protective device as claimed in any of the preceding claims, characterized in that in the interior of the gas bag there is provided a heat-resistant foil lying on the inner wall of the gas bag, which foil is arranged and dimensioned such that in the inflated condition of the head gas bag (10) it is not subjected to a tensile load.

24. The lateral impact protective device as claimed in any of the preceding claims, characterized in that in the non-inflated condition the head gas bag (10) is attached to the vehicle so as not to be folded in longitudinal direction.

25. The lateral impact protective device as claimed in any of the preceding claims, characterized in that in the inflated condition the head gas bag (10) consists of several cushion-shaped elements.

26. The lateral impact protective device as claimed in claim 25, characterized in that the cushion-shaped elements are in flow connection with each other.

27. The lateral impact protective device as claimed in any of the preceding claims, characterized in that one or more gas generators (60) are attached to the A-column and/or the C-column (20, 40) of a vehicle and communicate with the interior of the gas bag via corresponding gas inlet openings (16) at one of the ends (12) of the head gas bag (10).

28. The lateral impact protective device as claimed in claim 7, characterized in that one or more gas generators (60) are concealed to the side of the dashboard or in the vicinity of the back rest of the rear seat.

29. The lateral impact protective device as claimed in any of the preceding claims, characterized in that the head gas bag (10) includes at least one member (38) partially constricting the head gas bag in the inflated condition, by which member the lower edge of the head gas bag (10), when inflated, receives an indentation, seen transverse to the longitudinal direction of the vehicle.

## Revendications (Revendications pour l'(les) Etat(s) contractant(s) suivant(s): DE, FR, GB)

1. Dispositif de protection des occupants d'un véhicule contre les impacts latéraux, comprenant un coussin à gaz de protection de tête (10), caractérisé en ce qu'à l'état gonflé, le coussin à gaz allongé de protection de tête (10), prévu pour un occupant avant et pour un occupant arrière, s'étend depuis une zone située latéralement à un occupant avant jusque dans une zone située latéralement à un occupant arrière et à l'état plié, il est agencé dans une housse de montage (22).

2. Dispositif de protection contre les impacts latéraux selon la revendication 1, caractérisé en ce que la housse de montage (22) est enduite sur la face intérieure.

3. Dispositif de protection contre les impacts latéraux selon la revendication 1 ou 2, caractérisé en ce que la housse de montage (22) s'étend depuis une extrémité inférieure de la colonne A (20) jusqu'à la colonne C (40).

4. Dispositif de protection contre les impacts latéraux selon l'une quelconque des revendications précédentes, caractérisé en ce que la housse de montage (22) est fixée au véhicule et le coussin à gaz de protection de tête (10) est fixé au véhicule le long de son bord supérieur à l'état gonflé.

5. Dispositif de protection contre les impacts latéraux selon l'une quelconque des revendications précédentes, caractérisé en ce que la housse de montage (22) comporte un orifice de sortie (34) en forme de fente s'étendant dans la direction longitudinale, lequel est tourné vers la vitre latérale (24) lorsque la housse de montage (22) est en position montée.

6. Dispositif de protection contre les impacts latéraux selon l'une quelconque des revendications précédentes, caractérisé en ce que la housse de montage (22) est en matériau souple.

7. Dispositif de protection contre les impacts latéraux selon l'une quelconque des revendications précédentes, caractérisé en ce qu'à l'état gonflé, le coussin à gaz allongé de protection de tête (10) s'étend depuis une zone située latéralement à un occupant avant à la hauteur de la tête de manière continue jusque dans une zone située latéralement à un occupant arrière et, dans la zone de son bord inférieur à l'état gonflé, il est fixé par ses extrémités longitudinales seulement à la colonne A et à la colonne C (20, 40) du véhicule et à l'état gonflé, il devient tendu entre ses points de fixation sur la colonne A et sur la colonne C (20, 40).

8. Dispositif de protection selon l'une quelconque des revendications précédentes, caractérisé en ce que le dispositif de protection est réalisé sous forme d'une unité susceptible d'être montée ultérieurement dans le véhicule.

9. Dispositif de protection des occupants d'un véhicule contre les impacts latéraux selon l'une quelconque des revendications précédentes, caractérisé en ce que le coussin à gaz de protection de tête (10) est en liaison d'écoulement par une extrémité (12, 14) effilée avec un générateur de gaz (60).

10. Dispositif de protection des occupants d'un véhicule contre les impacts latéraux selon l'une quelconque des revendications précédentes, caractérisé en ce qu'il est prévu une feuille appliquée sur la paroi intérieure du coussin à gaz, laquelle est réalisée de manière à ce que le coussin à gaz de protection de tête (10) reste gonflé pendant plusieurs secondes.

11. Dispositif de protection contre les impacts latéraux selon l'une quelconque des revendications précédentes, caractérisé en ce qu'à l'intérieur du coussin à gaz est disposée une feuille thermostable qui est appliquée contre la paroi intérieure du coussin à gaz et qui est agencée et dimensionnée de façon à ne pas être sollicitée en traction lorsque le coussin à gaz de protection de tête (10) est à l'état gonflé.

12. Dispositif de protection selon l'une quelconque des revendications précédentes, caractérisé en ce que le coussin à gaz de protection de tête (10) est fixé à une extrémité (12) sur la colonne A (20) et à une extrémité opposée (14) sur la colonne C (40).

13. Dispositif de protection contre les impacts latéraux selon l'une quelconque des revendications précédentes, caractérisé en ce qu'à l'état plié, le coussin à gaz de protection de tête (10) est incorporé dans le véhicule en s'étendant en forme d'arc le long de la colonne A (20) et le long du cadre de toit (30) jusqu'à la colonne C (40).

14. Dispositif de protection contre les impacts latéraux selon l'une quelconque des revendications précédentes, caractérisé en ce qu'à l'état plié, le coussin à gaz de protection de tête (10) s'étend le long d'au moins une partie de la colonne A (20), le long du cadre de toit (30) et le long d'au moins une partie de la colonne C (40) d'un véhicule.

15. Dispositif de protection contre les impacts latéraux selon l'une quelconque des revendications précédentes, caractérisé en ce qu'à l'état plié, le coussin à gaz de protection de tête (10) s'étend depuis une extrémité inférieure de la colonne A (20) jusqu'à une extrémité inférieure de la colonne C (40).

16. Dispositif de protection contre les impacts latéraux selon l'une quelconque des revendications précédentes, caractérisé en ce qu'à l'état gonflé, le coussin à gaz de protection de tête (10) s'étend depuis la colonne A (20) jusqu'à la colonne C (40) d'un véhicule.

17. Dispositif de protection contre les impacts latéraux selon l'une quelconque des revendications précédentes, caractérisé en ce que par son bord supérieur à l'état gonflé, le coussin à gaz de protection de tête (10) est fixé sur la colonne A (20), le cadre de toit (30) et la colonne C (40) d'un véhicule.

18. Dispositif de protection contre les impacts latéraux selon l'une quelconque des revendications précédentes, caractérisé en ce qu'à l'état gonflé, le coussin à gaz de protection de tête (10) devient tendu entre ses points de fixation.

19. Dispositif de protection contre les impacts latéraux selon la revendication 18, caractérisé en ce qu'à l'état gonflé, le coussin à gaz de protection de tête (10) devient tendu entre ses points de fixation sur la colonne A (20) et la colonne C (40).

20. Dispositif de protection contre les impacts latéraux selon la revendication 18, caractérisé en ce qu'à l'état gonflé, le coussin à gaz de protection de tête (10) devient tendu entre ses points de fixation agencés en forme d'arc.

21. Dispositif de protection contre les impacts latéraux selon l'une quelconque des revendications précédentes, caractérisé en ce que le coussin à gaz de protection de tête (10) présente au moins un élément (38) qui l'étrangle partiellement à l'état gonflé, qui s'étend transversalement à la direction longitudinale du coussin à gaz et qui, lors du gonflage, raccourcit le coussin à gaz de protection de tête (10) en direction longitudinale.

22. Dispositif de protection contre les impacts latéraux selon la revendication 21, caractérisé en ce que l'élément d'étranglement (38) est fixé sur la paroi du coussin à gaz de protection de tête (10) et est réalisé sous la forme d'un cordon ou d'un ruban.

23. Dispositif de protection contre les impacts latéraux selon la revendication 21 ou 22, caractérisé en ce que l'élément (38) étrangle la zone de bord inférieur (42) du coussin à gaz de protection de tête (10).

24. Dispositif de protection contre les impacts latéraux selon l'une quelconque des revendications précédentes, caractérisé en ce qu'à l'état gonflé, le coussin à gaz de protection de tête (10) s'étend jusque dans la zone inférieure de la vitre latérale et est effilé vers ses extrémités (12, 14).

25. Dispositif de protection des occupants d'un véhicule contre les impacts latéraux selon l'une quelconque des revendications précédentes, caractérisé en ce qu'à l'état non gonflé, le coussin à gaz de protection de tête (10) est fixé sur le véhicule sans être plié en direction longitudinale.

26. Dispositif de protection contre les impacts latéraux selon l'une quelconque des revendications précédentes, caractérisé en ce qu'à l'état gonflé, le coussin à gaz de protection de tête (10) est formé par plusieurs éléments en forme de coussin.

27. Dispositif de protection contre les impacts latéraux selon la revendication 26, caractérisé en ce que les éléments en forme de coussin sont en liaison d'écoulement les uns avec les autres.

28. Dispositif de protection contre les impacts latéraux selon l'une quelconque des revendications précédentes, caractérisé en ce qu'un ou plusieurs générateurs de gaz (60) sont fixés aux colonnes A et/ou C (20, 40) d'un véhicule et communiquent avec l'intérieur du coussin à gaz par des orifices d'entrée de gaz (16) correspondants situés à l'une des extrémités (12) du coussin à gaz de protection de tête (10).

29. Dispositif de protection contre les impacts latéraux selon la revendication 28, caractérisé en ce qu'un ou plusieurs générateurs de gaz (60) sont agencés de manière cachée latéralement au tableau de bord ou dans la zone du dossier du siège arrière.

30. Dispositif de protection contre les impacts latéraux selon l'une quelconque des revendications précédentes, caractérisé en ce que le coussin à gaz de protection de tête (10) présente au moins un élément (38) qui l'étrangle partiellement à l'état gonflé, par lequel le bord inférieur du coussin à gaz de protection de tête (10) reçoit un creux à l'état gonflé, vu transversalement à la direction longitudinale du véhicule.

## Revendications (Revendications pour l'(les) Etat(s) contractant(s) suivant(s): IT)

1. Dispositif de protection des occupants d'un véhicule contre les impacts latéraux, comprenant un coussin à gaz de protection de tête (10), caractérisé en ce qu'à l'état gonflé, le coussin à gaz allongé de protection de tête (10), prévu pour un occupant avant et pour un occupant arrière, s'étend depuis une zone située latéralement à un occupant avant jusque dans une zone située latéralement à un occupant arrière et est fixé à une extrémité (12) sur la colonne A (20) et à une extrémité opposée (14) sur la colonne C (40) d'un véhicule.

2. Dispositif de protection des occupants d'un véhicule contre les impacts latéraux, en particulier selon la revendication 1, comprenant un coussin de gaz de protection de tête (10), caractérisé en ce qu'à l'état gonflé, le coussin à gaz allongé de protection de tête (10), prévu pour un occupant avant et pour un occupant arrière, s'étend, depuis une zone située latéralement à un occupant avant jusque dans une zone située latéralement à un occupant arrière et est incorporé à l'état plié dans le véhicule en s'étendant en forme d'arc le long de la colonne A (20) et le long du cadre de toit (30) jusqu'à la colonne C (40).

3. Dispositif de protection contre les impacts latéraux selon la revendication 1 ou 2, caractérisé en ce qu'à l'état plié, le coussin à gaz de protection de tête (10) s'étend le long d'au moins une partie de la colonne A (20), le long du cadre de toit (30) et le long d'au moins une partie de la colonne C (40) d'un véhicule.

4. Dispositif de protection contre les impacts latéraux selon l'une quelconque des revendications précédentes, caractérisé en ce qu'à l'état plié, le coussin à gaz de protection de tête (10) s'étend depuis une extrémité inférieure de la colonne A (20) jusqu'à une extrémité inférieure de la colonne C (40).

5. Dispositif de protection contre les impacts latéraux selon l'une quelconque des revendications précédentes, caractérisé en ce qu'à l'état gonflé, le coussin à gaz de protection de tête (10) s'étend depuis la colonne A (20) jusqu'à la colonne C (40) d'un véhicule.

6. Dispositif de protection contre les impacts latéraux selon l'une quelconque des revendications précédentes, caractérisé en ce que par son bord supérieur à l'état gonflé, le coussin à gaz de protection de tête (10) est fixé sur la colonne A (20), le cadre de toit (30) et la colonne C (40) d'un véhicule.

7. Dispositif de protection contre les impacts latéraux selon l'une quelconque des revendications précédentes, caractérisé en ce qu'un ou plusieurs générateurs de gaz (60) sont fixés aux colonnes A et/ou C (20, 40) d'un véhicule et communiquent avec l'intérieur du coussin à gaz par des orifices d'entrée de gaz (16) correspondants situés à l'une des extrémités (12) du coussin à gaz de protection de tête (10).

8. Dispositif de protection contre les impacts latéraux selon la revendication 7, caractérisé en ce qu'un ou plusieurs générateurs de gaz (60) sont agencés de manière cachée latéralement au tableau de bord ou dans la zone du dossier du siège arrière.

9. Dispositif de protection des occupants de véhicules contre les impacts latéraux, en particulier selon l'une quelconque des revendications précédentes, comprenant un coussin à gaz de protection de tête (10), caractérisé en ce qu'à l'état gonflé, le coussin à gaz allongé de protection de tête (10), prévu pour un occupant avant et pour un occupant arrière, s'étend depuis une zone située latéralement à un occupant avant jusque dans une zone située latéralement à un occupant arrière et en ce qu'à l'état plié, le coussin à gaz de protection de tête (10) est agencé dans une housse de montage (22).

10. Dispositif de protection contre les impacts latéraux selon la revendication 9, caractérisé en ce que la housse de montage (22) est enduite sur la face intérieure.

11. Dispositif de protection contre les impacts latéraux selon la revendication 9 ou 10, caractérisé en ce que la housse de montage (22) s'étend depuis une extrémité inférieure de la colonne A (20) jusqu'à la colonne C (40).

12. Dispositif de protection contre les impacts latéraux selon l'une quelconque des revendications 9 à 11, caractérisé en ce que la housse de montage (22) est fixée au véhicule et le coussin à gaz de protection de tête (10) est fixé au véhicule le long de son bord supérieur à l'état gonflé.

13. Dispositif de protection contre les impacts latéraux selon l'une quelconque des revendications 9 à 12, caractérisé en ce que la housse de montage (22) comporte un orifice de sortie (34) en forme de fente s'étendant dans la direction longitudinale, lequel est tourné vers la vitre latérale (24) lorsque la housse de montage (22) est en position montée.

14. Dispositif de protection contre les impacts latéraux selon l'une quelconque des revendications 9 à 13, caractérisé en ce que la housse de montage (22) est en matériau souple.

15. Dispositif de protection des occupants de véhicules contre les impacts latéraux selon l'une quelconque des revendications précédentes, caractérisé en ce que le dispositif de protection est réalisé sous forme d'une unité susceptible d'être montée ultérieurement dans le véhicule.

16. Dispositif de protection des occupants de véhicules contre les impacts latéraux selon l'une quelconque des revendications précédentes, caractérisé en ce qu'à l'état gonflé, le coussin à gaz de protection de tête (10) devient tendu entre ses points de fixation.

17. Dispositif de protection contre les impacts latéraux selon la revendication 16, caractérisé en ce qu'à l'état gonflé, le coussin à gaz de protection de tête (10) devient tendu entre ses points de fixation sur la colonne A (20) et la colonne C (40).

18. Dispositif de protection contre les impacts latéraux selon la revendication 16, caractérisé en ce qu'à l'état gonflé, le coussin à gaz de protection de tête (10) devient tendu entre ses points de fixation agencés en forme d'arc.

19. Dispositif de protection contre les impacts latéraux selon l'une quelconque des revendications précédentes, caractérisé en ce que le coussin à gaz de protection de tête (10) présente au moins un élément (38) qui l'étrangle partiellement à l'état gonflé, qui s'étend transversalement à la direction longitudinale du coussin à gaz et qui, lors du gonflage, raccourcit le coussin à gaz de protection de tête (10) en direction longitudinale.

20. Dispositif de protection contre les impacts latéraux selon la revendication 19, caractérisé en ce que l'élément d'étranglement (38) est fixé sur la paroi du coussin à gaz de protection de tête (10) et est réalisé sous la forme d'un cordon ou d'un ruban.

21. Dispositif de protection contre les impacts latéraux selon la revendication 19 ou 20, caractérisé en ce que l'élément (38) étrangle la zone de bord inférieur (42) du coussin à gaz de protection de tête (10).

22. Dispositif de protection contre les impacts latéraux selon l'une quelconque des revendications précédentes, caractérisé en ce qu'à l'état gonflé, le coussin à gaz de protection de tête (10) s'étend jusque dans la zone inférieure de la vitre latérale et est effilé vers ses extrémités (12, 14).

23. Dispositif de protection des occupants d'un véhicule contre les impacts latéraux selon l'une quelconque des revendications précédentes, caractérisé en ce que le coussin à gaz de protection de tête (10) est en liaison d'écoulement par une extrémité (12, 14) effilée avec un générateur de gaz (60).

24. Dispositif de protection des occupants d'un véhicule contre les impacts latéraux selon l'une quelconque des revendications précédentes, caractérisé en ce qu'il est prévu une feuille appliquée sur la paroi intérieure du coussin à gaz, laquelle est réalisée de manière à ce que le coussin à gaz de protection de tête (10) reste gonflé pendant plusieurs secondes.

25. Dispositif de protection contre les impacts latéraux selon l'une quelconque des revendications précédentes, caractérisé en ce qu'à l'intérieur du coussin à gaz est disposée une feuille thermostable qui est appliquée contre la paroi intérieure du coussin à gaz et qui est agencée et dimensionnée de façon à ne pas être sollicitée en traction lorsque le coussin à gaz de protection de tête (10) est à l'état gonflé.

26. Dispositif de protection des occupants d'un véhicule contre les impacts latéraux selon l'une quelconque des revendications précédentes, caractérisé en ce qu'à l'état non gonflé, le coussin à gaz de protection de tête (10) est fixé sur le véhicule sans être plié en direction longitudinale.

27. Dispositif de protection contre les impacts latéraux selon l'une quelconque des revendications précédentes, caractérisé en ce qu'à l'état gonflé, le coussin à gaz de protection de tête (10) est constitué par plusieurs éléments en forme de coussin.

28. Dispositif de protection contre les impacts latéraux selon la revendication 27, caractérisé en ce que les éléments en forme de coussin sont en liaison d'écoulement les uns avec les autres.

29. Dispositif de protection des occupants d'un véhicule contre les impacts latéraux, comprenant un coussin à gaz de protection de tête (10) selon l'une quelconque des revendications précédentes, caractérisé en ce que le coussin à gaz de protection de tête (10) présente au moins un élément (38) qui l'étrangle partiellement à l'état gonflé, par lequel le bord inférieur du coussin à gaz de protection de tête (10) reçoit un creux à l'état gonflé, vu transversalement à la direction longitudinale du véhicule.

## Revendications (Revendications pour l'(les) Etat(s) contractant(s) suivant(s): ES)

1. Dispositif de protection des occupants d'un véhicule contre les impacts latéraux, comprenant un coussin à gaz de protection de tête (10), caractérisé en ce qu'à l'état gonflé, le coussin à gaz allongé de protection de tête (10), prévu pour un occupant avant et pour un occupant arrière, s'étend depuis une zone située latéralement à un occupant avant jusque dans une zone située latéralement à un occupant arrière et en ce qu'à l'état plié, le coussin à gaz de protection de tête (10) est agencé dans une housse de montage (22).

2. Dispositif de protection contre les impacts latéraux selon la revendication 1, caractérisé en ce qu'un ou plusieurs générateurs de gaz (60) sont fixés aux colonnes A et/ou C (20, 40) d'un véhicule et communiquent avec l'intérieur du coussin à gaz par des orifices d'entrée de gaz (16) correspondants situés à l'une des extrémités (12) du coussin à gaz de protection de tête (10).

3. Dispositif de protection contre les impacts latéraux selon la revendication 2, caractérisé en ce qu'un ou plusieurs générateurs de gaz (60) sont agencés de manière cachée latéralement au tableau de bord ou dans la zone du dossier du siège arrière.

4. Dispositif de protection contre les impacts latéraux selon la revendication 3, caractérisé en ce que la housse de montage (22) est enduite sur la face intérieure.

5. Dispositif de protection contre les impacts latéraux selon la revendication 3 ou 4, caractérisé en ce que la housse de montage (22) s'étend depuis une extrémité inférieure de la colonne A (20) jusqu'à la colonne C (40) du véhicule.

6. Dispositif de protection contre les impacts latéraux selon l'une quelconque des revendications 3 à 5, caractérisé en ce que la housse de montage (22) est fixée au véhicule et le coussin à gaz de protection de tête (10) est fixé au véhicule le long de son bord supérieur à l'état gonflé.

7. Dispositif de protection contre les impacts latéraux selon l'une quelconque des revendications 3 à 6, caractérisé en ce que la housse de montage (22) comporte un orifice de sortie (34) en forme de fente s'étendant dans la direction longitudinale, lequel est tourné vers la vitre latérale (24) lorsque la housse de montage (22) est en position montée.

8. Dispositif de protection contre les impacts latéraux selon l'une quelconque des revendications 3 à 7, caractérisé en ce que la housse de montage (22) est en matériau souple.

9. Dispositif de protection selon l'une quelconque des revendications précédentes, caractérisé en ce que le dispositif de protection est réalisé sous forme d'une unité susceptible d'être montée ultérieurement dans le véhicule.

10. Dispositif de protection selon l'une quelconque des revendications précédentes, caractérisé en ce que le coussin à gaz de protection de tête (10) est fixé à une extrémité (12) sur la colonne A (20) et à une extrémité opposée (14) sur la colonne C (40).

11. Dispositif de protection contre les impacts latéraux, en particulier selon l'une quelconque des revendications précédentes, caractérisé en ce qu'à l'état plié, le coussin à gaz de protection de tête (10) est incorporé dans le véhicule en s'étendant en forme d'arc le long de la colonne A (20) et le long du cadre de toit (30) jusqu'à la colonne C (40).

12. Dispositif de protection contre les impacts latéraux selon la revendication 11, caractérisé en ce qu'à l'état plié, le coussin à gaz de protection de tête (10) s'étend le long d'au moins une partie de la colonne A (20), le long du cadre de toit (30) et le long d'au moins une partie de la colonne C (40) d'un véhicule.

13. Dispositif de protection contre les impacts latéraux selon la revendication 12, caractérisé en ce qu'à l'état plié, le coussin à gaz de protection de tête (10) s'étend depuis une extrémité inférieure de la colonne A (20) jusqu'à une extrémité inférieure de la colonne C (40).

14. Dispositif de protection contre les impacts latéraux selon l'une quelconque des revendications précédentes, caractérisé en ce qu'à l'état gonflé, le coussin à gaz de protection de tête (10) s'étend depuis la colonne A (20) jusqu'à la colonne C (40) d'un véhicule.

15. Dispositif de protection contre les impacts latéraux selon l'une quelconque des revendications précédentes, caractérisé en ce que par son bord supérieur à l'état gonflé, le coussin à gaz de protection de tête (10) est fixé sur la colonne A (20), le cadre de toit (30) et la colonne C (40) d'un véhicule.

16. Dispositif de protection contre les impacts latéraux selon l'une quelconque des revendications précédentes, caractérisé en ce qu'à l'état gonflé, le coussin à gaz de protection de tête (10) devient tendu entre ses points de fixation.

17. Dispositif de protection contre les impacts latéraux selon la revendication 16, caractérisé en ce qu'à l'état gonflé, le coussin à gaz de protection de tête (10) devient tendu entre ses points de fixation sur la colonne A (20) et la colonne C (40).

18. Dispositif de protection contre les impacts latéraux selon l'une quelconque des revendications précédentes, caractérisé en ce qu'à l'état gonflé, le coussin à gaz de protection de tête (10) devient tendu entre ses points de fixation agencés en forme d'arc.

19. Dispositif de protection contre les impacts latéraux selon l'une quelconque des revendications précédentes, caractérisé en ce que le coussin à gaz de protection de tête (10) présente au moins un élément (38) qui l'étrangle partiellement à l'état gonflé, qui s'étend transversalement à la direction longitudinale du coussin à gaz et qui, lors du gonflage, raccourcit le coussin à gaz de protection de tête (10) en direction longitudinale.

20. Dispositif de protection contre les impacts latéraux selon la revendication 19, caractérisé en ce que l'élément d'étranglement (38) est fixé sur la paroi du coussin à gaz de protection de tête (10) et est réalisé sous la forme d'un cordon ou d'un ruban.

21. Dispositif de protection contre les impacts latéraux selon la revendication 19 ou 20, caractérisé en ce que l'élément (38) étrangle la zone de bord inférieur (42) du coussin à gaz de protection de tête (10).

22. Dispositif de protection contre les impacts latéraux selon l'une quelconque des revendications précédentes, caractérisé en ce qu'à l'état gonflé, le coussin à gaz de protection de tête (10) s'étend jusque dans la zone inférieure de la vitre latérale et est effilé vers ses extrémités (12, 14).

23. Dispositif de protection des occupants d'un véhicule contre les impacts latéraux selon l'une quelconque des revendications précédentes, caractérisé en ce que le coussin à gaz de protection de tête (10) est en liaison d'écoulement par une extrémité (12, 14) effilée avec un générateur de gaz (60).

24. Dispositif de protection des occupants d'un véhicule contre les impacts latéraux selon l'une quelconque des revendications précédentes, caractérisé en ce qu'il est prévu une feuille appliquée sur la paroi intérieure du coussin à gaz, laquelle est réalisée de manière à ce que le coussin à gaz de protection de tête (10) reste gonflé pendant plusieurs secondes.

25. Dispositif de protection contre les impacts latéraux selon l'une quelconque des revendications précédentes, caractérisé en ce qu'à l'intérieur du coussin à gaz est disposée une feuille thermostable qui est appliquée contre la paroi intérieure du coussin à gaz et qui est agencée et dimensionnée de façon à ne pas être sollicitée en traction lorsque le coussin à gaz de protection de tête (10) est à l'état gonflé.

26. Dispositif de protection des occupants d'un véhicule contre les impacts latéraux selon l'une quelconque des revendications précédentes, caractérisé en ce qu'à l'état non gonflé, le coussin à gaz de protection de tête (10) est fixé sur le véhicule sans être plié en direction longitudinale.

27. Dispositif de protection contre les impacts latéraux selon l'une quelconque des revendications précédentes, caractérisé en ce qu'à l'état gonflé, le coussin à gaz de protection de tête (10) est formé par plusieurs éléments en forme de coussin.

28. Dispositif de protection contre les impacts latéraux selon la revendication 27, caractérisé en ce que les éléments en forme de coussin sont en liaison d'écoulement les uns avec les autres.

29. Dispositif de protection contre les impacts latéraux selon l'une quelconque des revendications précédentes, caractérisé en ce que le coussin à gaz de protection de tête (10) présente au moins un élément (38) qui l'étrangle partiellement à l'état gonflé, par lequel le bord inférieur du coussin à gaz de protection de tête (10) reçoit un creux à l'état gonflé, vu transversalement à la direction longitudinale du véhicule.

## Revendications (Revendications pour l'(les) Etat(s) contractant(s) suivant(s): SE)

1. Dispositif de protection des occupants d'un véhicule contre les impacts latéraux, comprenant un coussin à gaz de protection de tête (10), caractérisé en ce qu'à l'état gonflé, le coussin à gaz allongé de protection de tête (10), s'étend depuis une zone située latéralement à un occupant avant à la hauteur de la tête de manière continue jusque dans une zone située latéralement à un occupant arrière et à l'état gonflé, il devient tendu entre ses points de fixation dans le véhicule.

2. Dispositif de protection d'un occupant d'un véhicule contre les impacts latéraux, en particulier selon la revendication 1, comprenant un coussin de gaz de protection de tête (10), caractérisé en ce qu'à l'état gonflé, le coussin à gaz allongé de protection de tête (10), prévu pour un occupant avant et pour un occupant arrière, s'étend depuis une zone située latéralement à un occupant avant jusque dans une zone située latéralement à un occupant arrière et, dans la zone de son bord inférieur à l'état gonflé, il est fixé par ses extrémités longitudinales aux colonnes (20, 40) du véhicule et il devient tendu entre ses extrémités longitudinales.

3. Dispositif de protection contre les impacts latéraux selon la revendication 1 ou 2, caractérisé en ce qu'à l'état gonflé, le coussin à gaz de protection de tête (10) devient tendu entre ses points de fixations sur la colonne A (20) et sur la colonne C (40).

4. Dispositif de protection contre les impacts latéraux selon l'une quelconque des revendications précédentes, comprenant un coussin à gaz de protection de tête (10), caractérisé en ce qu'à l'état plié, le coussin à gaz de protection de tête (10) est agencé dans une housse de montage (22).

5. Dispositif de protection contre les impacts latéraux selon la revendication 4, caractérisé en ce que la housse de montage (22) est enduite sur la face intérieure.

6. Dispositif de protection contre les impacts latéraux selon la revendication 4 ou 5, caractérisé en ce que la housse de montage (22) s'étend depuis une extrémité inférieure de la colonne A (20) jusqu'à la colonne C (40) du véhicule.

7. Dispositif de protection contre les impacts latéraux selon l'une quelconque des revendications 4 à 6, caractérisé en ce que la housse de montage (22) est fixée au véhicule et le coussin à gaz de protection de tête (10) est fixé au véhicule le long de son bord supérieur à l'état gonflé.

8. Dispositif de protection contre les impacts latéraux selon l'une quelconque des revendications 4 à 7, caractérisé en ce que la housse de montage (22) comporte un orifice de sortie (34) en forme de fente s'étendant dans la direction longitudinale, lequel est tourné vers la vibre latérale (24) lorsque la housse de montage (22) est en position montée.

9. Dispositif de protection contre les impacts latéraux selon l'une quelconque des revendications 4 à 8, caractérisé en ce que la housse de montage (22) est en matériau souple.

10. Dispositif de protection selon l'une quelconque des revendications précédentes, caractérisé en ce que le dispositif de protection est réalisé sous forme d'une unité susceptible d'être montée ultérieurement dans le véhicule.

11. Dispositif de protection contre les impacts latéraux selon l'une quelconque des revendications précédentes, caractérisé en ce que le coussin à gaz de protection de tête (10) est fixé à une extrémité (12) sur la colonne A (20) et à une extrémité opposée (14) sur la colonne C (40).

12. Dispositif de protection contre les impacts latéraux selon l'une quelconque des revendications précédentes, caractérisé en ce qu'à l'état plié, le coussin à gaz de protection de tête (10) est incorporé dans le véhicule en s'étendant en forme d'arc le long de la colonne A (20) et le long du cadre de toit (30) jusqu'à la colonne C (40).

13. Dispositif de protection contre les impacts latéraux selon la revendication 12, caractérisé en ce qu'à l'état plié, le coussin à gaz de protection de tête (10) s'étend le long d'au moins une partie de la colonne A (20), le long du cadre de toit (30) et le long d'au moins une partie de la colonne C (40) d'un véhicule.

14. Dispositif de protection contre les impacts latéraux selon la revendication 13, caractérisé en ce qu'à l'état plié, le coussin à gaz de protection de tête (10) s'étend depuis une extrémité inférieure de la colonne A (20) jusqu'à une extrémité inférieure de la colonne C (40).

15. Dispositif de protection contre les impacts latéraux selon l'une quelconque des revendications précédentes, caractérisé en ce qu'à l'état gonflé, le coussin à gaz de protection de tête (10) s'étend depuis la colonne A (20) jusqu'à la colonne C (40) d'un véhicule.

16. Dispositif de protection contre les impacts latéraux selon l'une quelconque des revendications précédentes, caractérisé en ce que par son bord supérieur à l'état gonflé, le coussin à gaz de protection de tête (10) est fixé sur la colonne A (20), le cadre de toit (30) et la colonne C (40) d'un véhicule.

17. Dispositif de protection contre les impacts latéraux selon l'une quelconque des revendications précédentes, caractérisé en ce que le coussin à gaz de protection de tête (10) présente au moins un élément (38) qui l'étrangle partiellement à l'état gonflé, qui s'étend transversalement à la direction longitudinale du coussin à gaz et qui, lors du gonflage, raccourcit le coussin à gaz de protection de tête (10) en direction longitudinale.

18. Dispositif de protection contre les impacts latéraux selon la revendication 17, caractérisé en ce que l'élément d'étranglement (38) est fixé sur la paroi du coussin à gaz de protection de tête (10) et est réalisé sous la forme d'un cordon ou d'un ruban.

19. Dispositif de protection contre les impacts latéraux selon la revendication 17 ou 18, caractérisé en ce que l'élément (38) étrangle la zone de bord inférieur (42) du coussin à gaz de protection de tête (10).

20. Dispositif de protection contre les impacts latéraux selon l'une quelconque des revendications précédentes, caractérisé en ce qu'à l'état gonflé, le coussin à gaz de protection de tête (10) s'étend jusque dans la zone inférieure de la vitre latérale et est effilé vers ses extrémités (12, 14).

21. Dispositif de protection des occupants d'un véhicule contre les impacts latéraux selon l'une quelconque des revendications précédentes, caractérisé en ce que le coussin à gaz de protection de tête (10) est en liaison d'écoulement avec un générateur de gaz (60) par une extrémité (12, 14) effilée.

22. Dispositif de protection des occupants d'un véhicule contre les impacts latéraux selon l'une quelconque des revendications précédentes, caractérisé en ce qu'il est prévu une feuille appliquée sur la paroi intérieure du coussin à gaz, laquelle est réalisée de manière à ce que le coussin à gaz de protection de tête (10) reste gonflé pendant plusieurs secondes.

23. Dispositif de protection contre les impacts latéraux selon l'une quelconque des revendications précédentes, caractérisé en ce qu'à l'intérieur du coussin à gaz est disposée une feuille thermostable qui est appliquée contre la paroi intérieure du coussin à gaz et qui est agencée et dimensionnée de façon à ne pas être sollicitée en traction lorsque le coussin à gaz de protection de tête (10) est à l'état gonflé.

24. Dispositif de protection des occupants d'un véhicule contre les impacts latéraux selon l'une quelconque des revendications précédentes, caractérisé en ce qu'à l'état non gonflé, le coussin à gaz de protection de tête (10) est fixé sur le véhicule sans être plié en direction longitudinale.

25. Dispositif de protection contre les impacts latéraux selon l'une quelconque des revendications précédentes, caractérisé en ce qu'à l'état gonflé, le coussin à gaz de protection de tête (10) est formé par plusieurs éléments en forme de coussin.

26. Dispositif de protection contre les impacts latéraux selon la revendication 25, caractérisé en ce que les éléments en forme de coussin sont en liaison d'écoulement les uns avec les autres.

27. Dispositif de protection contre les impacts latéraux selon l'une quelconque des revendications précédentes, caractérisé en ce qu'un ou plusieurs générateurs de gaz (60) sont fixés aux colonnes A et/ou C (20, 40) d'un véhicule et communiquent avec l'intérieur du coussin à gaz par des orifices d'entrée de gaz (16) correspondants situés à l'une des extrémités (12) du coussin à gaz de protection de tête (10).

28. Dispositif de protection contre les impacts latéraux selon la revendication 27, caractérisé en ce qu'un ou plusieurs générateurs de gaz (60) sont agencés de manière cachée latéralement au tableau de bord ou dans la zone du dossier du siège arrière.

29. Dispositif de protection contre les impacts latéraux, selon l'une quelconque des revendications précédentes, caractérisé en ce que le coussin à gaz de protection de tête (10) présente au moins un élément (38) qui l'étrangle partiellement à l'état gonflé, par lequel le bord inférieur du coussin à gaz de protection de tête (10) reçoit un creux à l'état gonflé, vu transversalement à la direction longitudinale du véhicule.
